# EUROPEAN PATENT APPLICATION

(11) **EP 4 561 026 A1**
(43) Date of publication of application: **28.05.2025**
(21) Application number: 23864717.6
(22) Date of filing: 13.09.2023
(51) Int. Cl.: H04L 67/568, H04W 72/1273

(54) **COMMUNICATION METHOD AND APPARATUS, AND COMPUTER-READABLE STORAGE MEDIUM**

(30) Priority: 16.09.2022 CN 202211131326
(71) Applicant: Huawei Technologies Co., Ltd., Shenzhen, Guangdong 518129 (CN)
(72) Inventor: XIANG, Hongyu, Shenzhen, Guangdong 518129 (CN); CHEN, Lei, Shenzhen, Guangdong 518129 (CN); PAN, Qi, Shenzhen, Guangdong 518129 (CN); WANG, Yan, Shenzhen, Guangdong 518129 (CN)
(74) Representative: Isarpatent
(86) International application number: PCT/CN2023/118516
(87) International publication number: WO 2024/055985

(57) **Abstract**

Embodiments of this application provide a communication method and apparatus, and a storage medium. The communication method may include: An access network device receives first information from an access and mobility management function network element. The first information carries a data size of downlink data of a terminal device buffered in a user plane function network element or a session management function network element, the terminal device is in an inactive state, and an extended discontinuous reception cycle is configured by the access network device for the terminal device. The access network device determines, based on the data size of the downlink data, that the downlink data is small data. The access network device sends a first indication to the terminal device, to indicate the terminal device to perform small data transmission. The access network device sends a second indication to the access and mobility management function network element or the user plane function network element, to indicate the user plane function network element to send the small data to the access network device. According to embodiments of this application, the terminal device can be supported in remaining in an inactive state and performing data or signaling transmission, and power consumption of the terminal device can be reduced.

## Description

This application claims priority to Chinese Patent Application No. 202211131326.9, filed with the China National Intellectual Property Administration on September 16, 2022 and entitled "COMMUNICATION METHOD AND APPARATUS, AND COMPUTER-READABLE STORAGE MEDIUM", which is incorporated herein by reference in its entirety.

### TECHNICAL FIELD

This application relates to the field of communication technologies, and in particular, to a communication method and apparatus, and a computer-readable storage medium.

### BACKGROUND

To reduce power consumption of monitoring a paging (paging) message by user equipment (user equipment, UE), a discontinuous reception (discontinuous reception, DRX) technology may be used to periodically monitor the paging message based on a DRX cycle. Further, an extended discontinuous reception (extended discontinuous reception, eDRX) technology may be used to prolong a paging message monitoring cycle and increase sleep duration of the UE, so that electric energy consumption is further reduced.

Currently, a case in which an eDRX cycle is not greater than 10.24s is discussed in an inactive (INACTIVE) state eDRX technology. Use of the eDRX cycle is the same as use of the DRX cycle. The UE monitors the paging message at an interval of an INACTIVE eDRX cycle. During this period, data or signaling sent by a network to the UE is directly buffered in an access network (radio access network, RAN). After RAN paging is performed and a radio resource control (radio resource control, RRC) connection is established between the UE and the RAN, the RAN sends the buffered data or signaling to the UE. For a case in which an eDRX cycle is greater than 10.24s, to avoid an excessively large amount of data to be buffered by a RAN device or a timeout of signaling sent by a network to the UE, data of the UE may be buffered in a user plane function (user plane function, UPF) network element, and signaling timer time is adjusted. Before a paging monitoring occasion of the UE arrives, if there is data or signaling to be sent to the terminal device, a core network (core network, CN) device sends a message to the access network through an N3/N2 interface, to start RAN paging. The terminal device responds to the RAN paging, and requests to resume the radio resource control (radio resource control, RRC) connection. After the UE and the RAN complete resuming the RRC connection, the RAN notifies the UPF not to buffer the data of the terminal device any longer, to perform data or signaling transmission. However, this method causes a specific delay in data or signaling transmission, and signaling overheads in an RRC connection resume process are large.

A small data transmission (small data transmission, SDT) technology and an early data transmission (early data transmission, EDT) technology may be used for data or signaling transmission when the UE remains in a non-connected state, to reduce signaling and power consumption overheads caused by RRC state switching. However, the SDT technology does not support MT SDT transmission, and the EDT technology cannot be directly reused to a scenario in which inactive state eDRX is greater than 10.24s.

### SUMMARY

Embodiments of this application disclose a communication method and apparatus, and a computer-readable storage medium, to support a terminal device in remaining in an inactive state and performing data or signaling transmission, so that power consumption caused by RRC state switching performed by the terminal device can be reduced.

According to a first aspect, an embodiment of this application discloses a first communication method, including: An access network device receives first information from an access and mobility management function network element (for example, an access and mobility management function (access and mobility management function, AMF) network element). The access network device determines, based on a data size of downlink data, that the downlink data is small data. The access network device sends a first indication to a terminal device. The access network device sends a second indication to the access and mobility management function network element or a user plane function network element.

The first information carries the data size of the downlink data of the terminal device buffered in the user plane function network element (for example, a user plane function (user plane function, UPF) network element) or a session management function (for example, a (session management function, SMF) network element). The terminal device is in an inactive state, and an eDRX cycle is configured by the access network device for the terminal device. The first indication indicates the terminal device to perform small data transmission, and the second indication indicates the user plane function network element to send the small data to the access network device.

It may be understood that, by implementing the first communication method, the access network device may make a decision about whether to perform small data transmission. If the access network device makes a decision to perform small data transmission, when an inactive state eDRX cycle is configured for the terminal device, the terminal device remains in the inactive state and performs data or signaling transmission, so that power consumption caused by RRC state switching performed by the terminal device is reduced.

In this embodiment of this application, an access network device communicating with a core network device may be a last serving base station, and an access network device communicating with a terminal device may be a receiving base station other than the last serving base station in an access network notification area. The receiving base station may interact with the last serving base station to store a context of the terminal device, and interact with the core network device.

In some feasible examples, the first information and the second indication may be N2 messages exchanged between the access and mobility management function network element and the access network device. After the access network device sends the second indication to the access and mobility management function network element, the method may further include: The access management function network element sends a session update request to the session management function network element. Correspondingly, the session management function network element receives the session update request from the access management function network element.

The session management function network element may be a session management function network element associated with the terminal device. The session update request is used to request to update a session status of a protocol data unit (protocol data unit, PDU) session established with the UE. After receiving the session update request, the session management function network element updates the status of the PDU session, and updates an associated UPF rule, so that the UPF no longer buffers the downlink data of the UE, and the UPF sends the downlink data used as small data to the access network device.

In some other feasible examples, the second indication may be an N3 message exchanged between the user plane function network element and the access network device. After receiving the second indication, the user plane function network element may be indicated not to buffer the downlink data of the terminal device any longer, and send the downlink data used as small data to the access network device.

In some feasible examples, before the access network device sends the second indication to the access and mobility management function network element or the user plane function network element, the method further includes: The access network device receives second information from the terminal device. The second information is used to confirm that the terminal device is able to perform data transmission with the core network device, or is used to confirm that the terminal device performs connection resumption. In this way, after receiving the second information, the access network device may send the second indication to the access and mobility management function network element or the user plane function network element. This helps improve a communication success rate.

In some feasible examples, the eDRX cycle may be duration of 10.24s, duration greater than 10.24s, or the like. This is not limited herein.

In some feasible examples, that the access network device determines, based on a data size of downlink data, that the downlink data is small data includes: If the data size of the downlink data is less than a capacity threshold, the access network device determines that the downlink data is small data.

The capacity threshold is not limited in this application. The capacity threshold may be determined with reference to a maximum value of small data specified in a communication standard, or may be determined based on a network rate, a network resource, and the like of an access network device in a current communication system. It may be understood that, in this example, whether the downlink data is small data is determined depending on whether the data size of the downlink data is less than the capacity threshold, so that accuracy of determining small data can be improved.

According to a second aspect, an embodiment of this application discloses a second communication method, including: An access and mobility management function network element receives third information from a session management function network element. The access and mobility management function network element sends first information to an access network device.

The third information carries a data size of downlink data of a terminal device buffered in a user plane function network element or the session management function network element. The first information carries the data size of the downlink data, and the data size of the downlink data may be used to determine whether the downlink data is small data. The terminal device is in an inactive state, and an eDRX cycle is configured by the access network device for the terminal device. In this way, the access network device may determine, based on the data size of the downlink data, whether the downlink data is small data, so that the access network device can make a decision about whether to perform small data transmission. If the access network device makes a decision to perform small data transmission, when an inactive state eDRX cycle is configured for the terminal device, the terminal device remains in the inactive state and performs data or signaling transmission, so that power consumption caused by RRC state switching performed by the terminal device is reduced.

In some feasible examples, after the access and mobility management function network element sends the first information to the access network device, the method further includes: The access and mobility management function network element receives a second indication from the access network device, where the second indication indicates the user plane function network element to send the small data to the access network device.

In some feasible examples, after the access and mobility management function network element receives the second indication from the access network device, the method further includes: The access and mobility management function network element sends a session update request to the session management function network element. The session update request is used to request to update a session status of a PDU session established with the terminal device. After receiving the session update request, the session management function network element updates the status of the PDU session, and updates an associated UPF rule, so that the user plane function network element no longer buffers the downlink data of the terminal device, and the user plane function network element sends the downlink data used as small data to the access network device.

In some feasible examples, the eDRX cycle may be duration of 10.24s, duration greater than 10.24s, or the like. This is not limited herein.

According to a third aspect, an embodiment of this application discloses a third communication method, including: An access network device receives, when buffering duration of downlink data of a terminal device buffered in a user plane function network element or a session management function network element expires, the downlink data from the user plane function network element. The access network device determines that the downlink data is small data. The access network device sends a first indication to the terminal device.

The terminal device is in an inactive state, and an eDRX cycle is configured by the access network device for the terminal device. The first indication indicates the terminal device to perform small data transmission. In this way, when the buffering duration of the downlink data of the terminal device buffered in the user plane function network element or the session management function network element expires, the user plane function network element sends the downlink data to the access network device. Then, the access network device may make a decision about whether to perform small data transmission. If the access network device makes a decision to perform small data transmission, when an inactive state eDRX cycle is configured for the terminal device, the terminal device remains in the inactive state and performs data or signaling transmission, so that power consumption caused by RRC state switching performed by the terminal device is reduced.

In some feasible examples, the eDRX cycle may be duration of 10.24s, duration greater than 10.24s, or the like. This is not limited herein.

A method for determining whether the downlink data is small data is not limited in this application. The method may be determining whether a data size of the downlink data is less than a capacity threshold. Alternatively, the method may be identifying whether an identifier in the downlink data is an identifier of small data. For example, a 5G core network establishes one or more PDU sessions for each terminal device, and a QoS flow is identified in the PDU session by using a quality of service (quality of service, QoS) flow identifier (QoS flow identifier, QFI). The QoS flow is mapped, in an accessed radio access network, to a data radio bearer (data radio bearer, DRB). Therefore, whether a DRB carrying downlink data is an SDT-associated DRB may be learned by using a QFI corresponding to a QoS flow, to make a decision about whether data in the QoS flow is small data. If the DRB corresponding to the QoS flow is an SDT-associated DRB, it is determined that the data in the QoS flow is small data.

According to a fourth aspect, an embodiment of this application discloses a fourth communication method, including: A user plane function network element receives a third indication from a session management function network element. The user plane function network element sends, when buffering duration of downlink data of a terminal device buffered in the user plane function network element or the session management function network element expires, the downlink data to an access network device.

The third indication indicates to send, when the buffering duration of the downlink data of the terminal device buffered in the user plane function network element or the session management function network element expires, the downlink data to the access network device, the terminal device is in an inactive state, and an eDRX cycle is configured by the access network device for the terminal device. In this way, the downlink data may be sent to the access network device when the buffering duration of the downlink data expires, so that the access network device determines whether the downlink data is small data. If the downlink data is small data, when an inactive state eDRX cycle is configured for the terminal device, the terminal device remains in the inactive state and performs data or signaling transmission, so that power consumption caused by RRC state switching performed by the terminal device is reduced.

**In** some feasible examples, the eDRX cycle may be duration of 10.24s, duration greater than 10.24s, or the like. This is not limited herein.

According to a fifth aspect, an embodiment of this application discloses a fifth communication method, including: An access and mobility management function network element obtains buffering duration of downlink data of a terminal device buffered in a user plane function network element or a session management function network element. The access and mobility management function network element sends fourth information to the session management function network element.

The fourth information carries the buffering duration. The buffering duration in the third aspect, the fourth aspect, and the fifth aspect may be different from the buffering duration in the first aspect and the second aspect, and buffering duration in the following sixth aspect and seventh aspect. The buffering duration herein indicates reachability time of the terminal device, so that the user plane function network element is able to perform data or signaling transmission when the buffering duration expires. In this way, the user plane function network element may send, when the buffering duration of the downlink data of the terminal device buffered in the user plane function network element or the session management function network element expires, the downlink data to an access network device, so that the access network device makes a decision about whether to perform small data transmission. If the access network device makes a decision to perform small data transmission, when an inactive state eDRX cycle is configured for the terminal device, the terminal device remains in an inactive state and performs data or signaling transmission, so that power consumption caused by RRC state switching performed by the terminal device is reduced.

In some feasible examples, the access and mobility management function network element obtains, based on an eDRX configuration of the terminal device, the buffering duration of the downlink data of the terminal device buffered in the user plane function network element or the session management function network element. The eDRX configuration includes an eDRX cycle configured by the access network device. In this way, accuracy of configuring the buffering duration of the downlink data can be improved.

In some feasible examples, the eDRX cycle may be duration of 10.24s, duration greater than 10.24s, or the like. This is not limited herein.

According to a sixth aspect, an embodiment of this application discloses a sixth communication method, including: An access and mobility management function network element receives fifth information from an access network device. The access and mobility management function network element receives sixth information from a session management function network element. The access and mobility management function network element sends a fourth indication to the access network device.

The fifth information carries an eDRX cycle configured by the access network device for a terminal device when the terminal device is in an inactive state. The fifth information is used to determine that the terminal device and the access network device support small data transmission. The sixth information is used to determine that downlink data of the terminal device buffered in a user plane function network element or the session management network element is small data. The fourth indication indicates the access network device to perform small data transmission. In this way, a core network device may make a decision about whether to perform small data transmission. If the core network device makes a decision to perform small data transmission, when an inactive state eDRX cycle is configured for the terminal device, the terminal device remains in the inactive state and performs data or signaling transmission, so that power consumption caused by RRC state switching performed by the terminal device is reduced.

In some feasible examples, the fifth information further carries capability information of the terminal device. Further, the fifth information may include an SDT support capability of the terminal device. After the access and mobility management function network element receives the fifth information from the access network device, the method further includes: The access and mobility management function network element determines, based on the capability information of the terminal device, that the user plane function network element supports buffering the small data of the terminal device.

In some feasible examples, the sixth information carries a data size of the downlink data. The sixth information may include one piece of indication information, indicating that the downlink data of the terminal device buffered in the user plane function network element is small data. The indication information may be obtained through decision-making by the session management function network element. The sixth information may alternatively include the data size of the downlink data, so that the access and mobility management function network element may determine, based on the data size of the downlink data, whether the downlink data is small data.

The fifth information may further indicate the access and mobility management function network element to calculate reachability time of the terminal device, to determine whether the user plane function network element buffers the downlink data of the terminal device, and the like. A method for determining that the terminal device and the access network device support small data transmission is not limited in this application. The access and mobility management function network element may determine, based on the capability information of the terminal device, whether the terminal device supports small data transmission. If the fifth information does not carry the capability information of the terminal device, the access and mobility management function network element may obtain the capability information of the terminal device by using context information or other information of the terminal device. The access and mobility management function network element may further determine, by using a previously received N2 message, for example, NG Setup, whether the access network device supports small data transmission. Alternatively, the access and mobility management function network element determines, based on the access network device being a target access network device supporting SDT, which is indicated in the fifth information, that the access network device supports small data transmission.

In some feasible examples, the eDRX cycle may be duration of 10.24s, duration greater than 10.24s, or the like. This is not limited herein.

In some feasible examples, after the access and mobility management function network element sends the fourth indication to the access network device, the method further includes: The access and mobility management function network element receives a second indication from the access network device, where the second indication indicates the user plane function network element to send the small data to the access network device.

In some feasible examples, after the access and mobility management function network element receives the second indication from the access network device, the method further includes: The access and mobility management function network element sends a session update request to the session management function network element. The session update request is used to request to update a session status of a PDU session established with the terminal device. After receiving the session update request, the session management function network element updates the status of the PDU session, and updates an associated UPF rule, so that the user plane function network element no longer buffers the downlink data of the terminal device, and the user plane function network element sends the downlink data used as small data to the access network device.

According to a seventh aspect, an embodiment of this application discloses a seventh communication method, including: An access network device sends fifth information to an access and mobility management function network element. The access network device receives a fourth indication from the access and mobility management function network element.

The fifth information carries an eDRX cycle configured by the access network device for a terminal device when the terminal device is in an inactive state. The fifth information is used to determine that the terminal device and the access network device support small data transmission, and the fourth indication indicates the access network device to perform small data transmission. In this way, a core network device may make a decision about whether to perform small data transmission. If the core network device makes a decision to perform small data transmission, when an inactive state eDRX cycle is configured for the terminal device, the terminal device remains in the inactive state and performs data or signaling transmission, so that power consumption caused by RRC state switching performed by the terminal device is reduced.

In some feasible examples, after the access network device receives the fourth indication from the access and mobility management function network element, the method further includes: The access network device sends a first indication to the terminal device. The first indication indicates the terminal device to perform small data transmission. In this way, a communication success rate is improved.

In some feasible examples, after the access network device receives the fourth indication from the access and mobility management function network element, the method further includes: The access network device sends a second indication to the access and mobility management function network element or a user plane function network element, where the second indication indicates the user plane function network element to send downlink data used as small data to the access network device. In this way, the communication success rate is improved.

In some feasible examples, before the access network device sends the second indication to the access and mobility management function network element or the user plane function network element, the method further includes: The access network device receives second information from the terminal device. The second information is used to confirm that the terminal device is able to perform data transmission with the core network device, or is used to confirm that the terminal device performs connection resumption. In this way, after receiving the second information, the access network device may send the second indication to the access and mobility management function network element or the user plane function network element. This helps improve the communication success rate.

According to an eighth aspect, this application discloses a first communication apparatus, used in an access network device, and including: a transceiver unit, configured to receive first information from an access and mobility management function network element; and a processing unit, configured to determine, based on a data size of downlink data, that the downlink data is small data. The transceiver unit is further configured to send a first indication to a terminal device. The access network device sends a second indication to the access and mobility management function network element or a user plane function network element.

The first information carries the data size of the downlink data of the terminal device buffered in the user plane function network element or a session management function. The terminal device is in an inactive state, and an eDRX cycle is configured by the access network device for the terminal device. The first indication indicates the terminal device to perform small data transmission, and the second indication indicates the user plane function network element to send the small data to the access network device.

In some feasible examples, the transceiver unit is further configured to receive second information from the terminal device. The second information is used to confirm that the terminal device is able to perform data transmission with a core network device, or is used to confirm that the terminal device performs connection resumption.

In some feasible examples, the eDRX cycle may be duration of 10.24s, duration greater than 10.24s, or the like. This is not limited herein.

It may be understood that specific content of the eighth aspect corresponds to content of the first aspect. For corresponding features of the eighth aspect and beneficial effects achieved by the eighth aspect, refer to descriptions of the first aspect. To avoid repetition, detailed descriptions are properly omitted herein.

According to a ninth aspect, this application discloses a second communication apparatus, used in an access and mobility management function network element, and including: a transceiver unit, configured to receive third information from a session management function network element. The transceiver unit is further configured to send first information to an access network device.

The third information carries a data size of downlink data of a terminal device buffered in a user plane function network element or the session management function network element. The first information carries the data size of the downlink data, and the data size of the downlink data may be used to determine whether the downlink data is small data. The terminal device is in an inactive state, and an eDRX cycle is configured by the access network device for the terminal device.

In some feasible examples, the transceiver unit is further configured to receive a second indication from the access network device, where the second indication indicates the user plane function network element to send the downlink data used as small data to the access network device.

In some feasible examples, the eDRX cycle may be duration of 10.24s, duration greater than 10.24s, or the like. This is not limited herein.

It may be understood that specific content of the ninth aspect corresponds to content of the second aspect. For corresponding features of the ninth aspect and beneficial effects achieved by the ninth aspect, refer to descriptions of the second aspect. To avoid repetition, detailed descriptions are properly omitted herein.

According to a tenth aspect, this application discloses a third communication apparatus, used in an access network device, and including: a transceiver unit, configured to receive, when buffering duration of downlink data of a terminal device buffered in a user plane function network element or a session management function network element expires, the downlink data from the user plane function network element; and a processing unit, configured to determine that the downlink data is small data. The transceiver unit is further configured to send a first indication to the terminal device. The terminal device is in an inactive state, and an eDRX cycle is configured by the access network device for the terminal device. The first indication indicates the terminal device to perform small data transmission.

In some feasible examples, the eDRX cycle may be duration of 10.24s, duration greater than 10.24s, or the like. This is not limited herein.

It may be understood that specific content of the tenth aspect corresponds to content of the third aspect. For corresponding features of the tenth aspect and beneficial effects achieved by the tenth aspect, refer to descriptions of the third aspect. To avoid repetition, detailed descriptions are properly omitted herein.

According to an eleventh aspect, this application discloses a fourth communication apparatus, used in a user plane function network element, and including: a transceiver unit, configured to receive a third indication from a session management function network element. The transceiver unit is further configured to send, when buffering duration of downlink data of a terminal device buffered in the user plane function network element or the session management function network element expires, the downlink data to an access network device. The third indication indicates to send, when the buffering duration of the downlink data of the terminal device buffered in the user plane function network element or the session management function network element expires, the downlink data to the access network device, the terminal device is in an inactive state, and an eDRX cycle is configured by the access network device for the terminal device.

In some feasible examples, the eDRX cycle may be duration of 10.24s, duration greater than 10.24s, or the like. This is not limited herein.

It may be understood that specific content of the eleventh aspect corresponds to content of the fourth aspect. For corresponding features of the eleventh aspect and beneficial effects achieved by the eleventh aspect, refer to descriptions of the fourth aspect. To avoid repetition, detailed descriptions are properly omitted herein.

According to a twelfth aspect, this application discloses a fifth communication apparatus, used in an access and mobility management function network element, and including: a processing unit, configured to obtain buffering duration of downlink data of a terminal device buffered in a user plane function network element or a session management function network element; and a transceiver unit, configured to send fourth information to the session management function network element. The fourth information carries the buffering duration.

In some feasible examples, the processing unit is specifically configured to obtain, based on an eDRX configuration of the terminal device, the buffering duration of the downlink data of the terminal device buffered in the user plane function network element or the session management function network element. The eDRX configuration includes an eDRX cycle configured by an access network device.

In some feasible examples, the eDRX cycle may be duration of 10.24s, duration greater than 10.24s, or the like. This is not limited herein.

It may be understood that specific content of the twelfth aspect corresponds to content of the fifth aspect. For corresponding features of the twelfth aspect and beneficial effects achieved by the twelfth aspect, refer to descriptions of the fifth aspect. To avoid repetition, detailed descriptions are properly omitted herein.

According to a thirteenth aspect, this application discloses a sixth communication apparatus, used in an access and mobility management function network element, and including: a transceiver unit, configured to receive fifth information from an access network device. The transceiver unit is further configured to receive sixth information from a session management function network element. The transceiver unit is further configured to send a fourth indication to the access network device.

The fifth information carries an eDRX cycle configured by the access network device for a terminal device when the terminal device is in an inactive state. The fifth information is used to determine that the terminal device and the access network device support small data transmission. The sixth information is used to determine that downlink data of the terminal device buffered in a user plane function network element or the session management network element is small data. The fourth indication indicates the access network device to perform small data transmission.

In some feasible examples, the fifth information further carries capability information of the terminal device. Further, the fifth information may include an SDT support capability of the terminal device. The processing unit is configured to determine, based on the capability information of the terminal device, that the user plane function network element supports buffering the small data of the terminal device.

In some feasible examples, the sixth information carries a data size of the downlink data. The sixth information may include one piece of indication information, indicating that the downlink data of the terminal device buffered in the user plane function network element is small data. The indication information may be obtained through decision-making by the session management function network element. The sixth information may alternatively include the data size of the downlink data, so that the access and mobility management function network element may determine, based on the data size of the downlink data, whether the downlink data is small data.

In some feasible examples, the eDRX cycle may be duration of 10.24s, duration greater than 10.24s, or the like. This is not limited herein.

It may be understood that specific content of the thirteenth aspect corresponds to content of the sixth aspect. For corresponding features of the thirteenth aspect and beneficial effects achieved by the thirteenth aspect, refer to descriptions of the sixth aspect. To avoid repetition, detailed descriptions are properly omitted herein.

According to a fourteenth aspect, this application discloses a seventh communication apparatus, used in an access network device, and including: a transceiver unit, configured to send fifth information to an access and mobility management function network element. The transceiver unit is further configured to receive a fourth indication from the access and mobility management function network element. The fifth information carries an eDRX cycle configured by the access network device for a terminal device when the terminal device is in an inactive state. The fifth information is used to determine that the terminal device and the access network device support small data transmission. The fourth indication indicates the access network device to perform small data transmission.

In some feasible examples, the transceiver unit is further configured to send a first indication to the terminal device, where the first indication indicates the terminal device to perform small data transmission.

The first indication indicates the terminal device to perform small data transmission and send a second indication to the access and mobility management function network element or a user plane function network element, where the second indication indicates the user plane function network element to send downlink data used as small data to the access network device.

In some feasible examples, the transceiver unit is further configured to receive second information from the terminal device. The second information is used to confirm that the terminal device is able to perform data transmission with a core network device, or is used to confirm that the terminal device performs connection resumption.

In some feasible examples, the eDRX cycle may be duration of 10.24s, duration greater than 10.24s, or the like. This is not limited herein.

It may be understood that specific content of the fourteenth aspect corresponds to content of the seventh aspect. For corresponding features of the fourteenth aspect and beneficial effects achieved by the fourteenth aspect, refer to descriptions of the seventh aspect. To avoid repetition, detailed descriptions are properly omitted herein.

According to a fifteenth aspect, this application discloses an eighth communication apparatus. The communication apparatus may be a terminal device, an access network device, a core network device, an access and mobility management function network element, a session management function network element, a user plane function network element, or the like, may include an apparatus like a chip, a chip system, or a circuit in these devices, or may be an apparatus that can implement a related function. The communication apparatus includes a processor. The processor is configured to execute instructions stored in a memory. When the instructions are executed, the communication methods in any one of the first aspect and the feasible examples of the first aspect, any one of the second aspect and the feasible examples of the second aspect, any one of the third aspect and the feasible examples of the third aspect, any one of the fourth aspect and the feasible examples of the fourth aspect, any one of the fifth aspect and the feasible examples of the fifth aspect, any one of the sixth aspect and the feasible examples of the sixth aspect, and any one of the seventh aspect and the feasible examples of the seventh aspect are implemented.

In some feasible examples, the communication apparatus further includes one or more of the memory and a transceiver. The transceiver is configured to receive and send data and/or signaling.

According to a sixteenth aspect, an embodiment of this application discloses a computer-readable storage medium. The computer-readable storage medium stores a computer program. When the computer program is run on one or more processors, the communication methods in any one of the first aspect and the feasible examples of the first aspect, any one of the second aspect and the feasible examples of the second aspect, any one of the third aspect and the feasible examples of the third aspect, any one of the fourth aspect and the feasible examples of the fourth aspect, any one of the fifth aspect and the feasible examples of the fifth aspect, any one of the sixth aspect and the feasible examples of the sixth aspect, and any one of the seventh aspect and the feasible examples of the seventh aspect are implemented.

According to a seventeenth aspect, an embodiment of this application discloses a computer program product. The computer program product is configured to store a computer program. When the computer program is run on a computer, the computer is enabled to perform the communication methods in any one of the first aspect and the feasible examples of the first aspect, any one of the second aspect and the feasible examples of the second aspect, any one of the third aspect and the feasible examples of the third aspect, any one of the fourth aspect and the feasible examples of the fourth aspect, any one of the fifth aspect and the feasible examples of the fifth aspect, any one of the sixth aspect and the feasible examples of the sixth aspect, and any one of the seventh aspect and the feasible examples of the seventh aspect.

According to an eighteenth aspect, an embodiment of this application discloses a first chip, including a processor and a memory. The processor is configured to invoke, from the memory, instructions stored in the memory, and run the instructions, so that a device in which the chip is installed performs the communication methods in any one of the first aspect and the feasible examples of the first aspect, any one of the second aspect and the feasible examples of the second aspect, any one of the third aspect and the feasible examples of the third aspect, any one of the fourth aspect and the feasible examples of the fourth aspect, any one of the fifth aspect and the feasible examples of the fifth aspect, any one of the sixth aspect and the feasible examples of the sixth aspect, and any one of the seventh aspect and the feasible examples of the seventh aspect.

According to a nineteenth aspect, an embodiment of this application discloses a second chip, including an input interface, an output interface, and a processing circuit. The input interface, the output interface, and the processing circuit are connected to each other through an internal connection path. The processing circuit is configured to perform the communication methods in any one of the first aspect and the feasible examples of the first aspect, any one of the second aspect and the feasible examples of the second aspect, any one of the third aspect and the feasible examples of the third aspect, any one of the fourth aspect and the feasible examples of the fourth aspect, any one of the fifth aspect and the feasible examples of the fifth aspect, any one of the sixth aspect and the feasible examples of the sixth aspect, and any one of the seventh aspect and the feasible examples of the seventh aspect.

According to a twentieth aspect, an embodiment of this application discloses a third chip, including an input interface, an output interface, and a processor, and optionally, further including a memory. The input interface, the output interface, the processor, and the memory are connected to each other through an internal connection path. The processor is configured to execute code in the memory. When the code is executed, the processor is configured to perform the communication methods in any one of the first aspect and the feasible examples of the first aspect, any one of the second aspect and the feasible examples of the second aspect, any one of the third aspect and the feasible examples of the third aspect, any one of the fourth aspect and the feasible examples of the fourth aspect, any one of the fifth aspect and the feasible examples of the fifth aspect, any one of the sixth aspect and the feasible examples of the sixth aspect, and any one of the seventh aspect and the feasible examples of the seventh aspect.

According to a twenty-first aspect, an embodiment of this application discloses a chip system, including at least one processor, a memory, and an interface circuit. The memory, a transceiver, and the at least one processor are interconnected through a line. The at least one memory stores a computer program. When the computer program is executed by the processor, the communication methods in any one of the first aspect and the feasible examples of the first aspect, any one of the second aspect and the feasible examples of the second aspect, any one of the third aspect and the feasible examples of the third aspect, any one of the fourth aspect and the feasible examples of the fourth aspect, any one of the fifth aspect and the feasible examples of the fifth aspect, any one of the sixth aspect and the feasible examples of the sixth aspect, and any one of the seventh aspect and the feasible examples of the seventh aspect are implemented.

It should be understood that mutual reference may be made to the implementations and beneficial effects of the foregoing aspects of this application.

### BRIEF DESCRIPTION OF DRAWINGS

The following describes accompanying drawings used in embodiments of this application.
FIG. 1 is a diagram of an architecture of a communication system according to an embodiment of this application;
FIG. 2 is a diagram of an architecture of another communication system according to an embodiment of this application;
FIG. 3 is a schematic flowchart of a paging method according to a conventional technology;
FIG. 4 is a schematic flowchart of a first communication method according to an embodiment of this application;
FIG. 5 is a schematic flowchart of a second communication method according to an embodiment of this application;
FIG. 6 is a schematic flowchart of a third communication method according to an embodiment of this application;
FIG. 7 is a schematic flowchart of a fourth communication method according to an embodiment of this application;
FIG. 8 is a schematic flowchart of a fifth communication method according to an embodiment of this application;
FIG. 9 is a diagram of a structure of a communication apparatus according to an embodiment of this application; and
FIG. 10 is a diagram of a structure of another communication apparatus according to an embodiment of this application.

### DESCRIPTION OF EMBODIMENTS

Technical solutions in embodiments of this application may be applied to various communication systems, for example, current communication systems such as a global system for mobile communications (global system for mobile communications, GSM) corresponding to a second generation (second generation, 2G) mobile communication technology, a general packet radio service (general packet radio service, GPRS) between the second generation mobile communication technology and a third generation (third generation, 3G) mobile communication technology, a code division multiple access (code division multiple access, CDMA) system, a wideband code division multiple access (wideband code division multiple access, WCDMA) system, and a universal mobile telecommunications system (universal mobile telecommunications system, UMTS) corresponding to the third generation mobile communication technology, a long term evolution (long term evolution, LTE) system corresponding to a fourth generation (fourth generation, 4G) mobile communication technology, and a new radio technology (new radio, NR) system corresponding to a fifth generation (fifth generation, 5G) mobile communication technology, and a future communication system like a sixth generation (sixth generation, 6G) system.

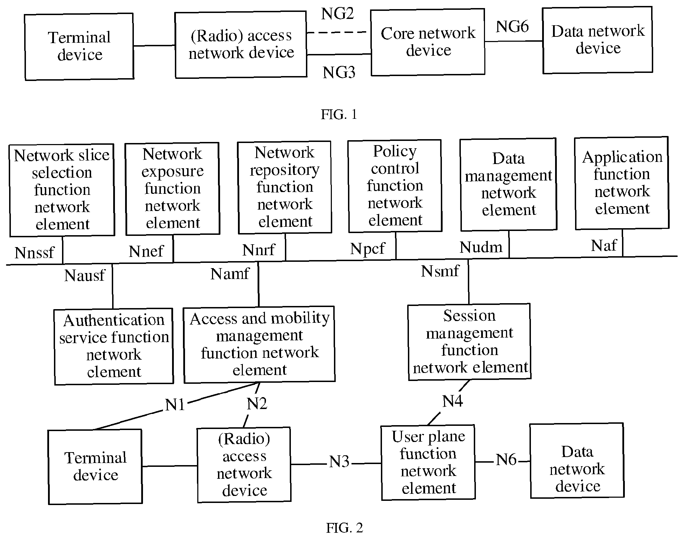

To make the objectives, technical solutions, and advantages of this application clearer, the following uses the 5G communication system as an example for description. The 5G mobile communication system may also be referred to as a next generation mobile communication system, may be referred to as a 5G system for short, and may be referred to as a NextGen or a 5GS for short in English. As shown in FIG. 1, a 5G communication system may include a terminal device, a (radio) access network ((radio) access network, (R)AN) device (which may be referred to as a NextGen (R)AN, or referred to as an NG-RAN for short), a core network (core network, CN) device (which may be referred to as a NextGen Core, or a 5GC), and a data network (data network, DN) device (which may be referred to as a NextGen Data network).

The terminal device is a device having a wireless transceiver function. The terminal device may be deployed on land, including an indoor device, an outdoor device, a handheld device, a wearable device, or a vehicle-mounted device. The terminal device may alternatively be deployed on water (for example, on a ship) or in the air (for example, on an airplane, a balloon, or a satellite). The terminal device may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like.

An application scenario is not limited in embodiments of this application. The terminal device may sometimes be referred to as user equipment (user equipment, UE), a terminal (terminal), an access terminal, a UE unit, a UE station, a mobile device, a mobile station (mobile station), a mobile terminal, a mobile client, a mobile unit (mobile unit), a remote station, a remote terminal device, a remote unit, a radio unit, a wireless communication device, a user agent, a user apparatus, or the like. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in 5G, a terminal device in a future evolved public land mobile network (public land mobile network, PLMN), a terminal device in a future non-public network (Non-Public network, NPN), or the like. In the 5G communication system, the terminal device establishes a signal connection and a data connection to the access network device by using a new radio technology, to transmit a control signal and service data to the data network.

In embodiments of this application, the access network device may be a device configured to support the terminal in accessing a communication system, and may be a base station, a relay station, or an access point. Further, the access network device may include but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission and reception point, TRP, or transmission point, TP), or the like. Alternatively, the access network device may be a gNB or a transmission point (TRP or TP) in a 5G communication system like an NR system, or one antenna panel or a group of (including a plurality of antenna panels) antenna panels of a base station in a 5G communication system. Alternatively, the access network device may be referred to as a donor node, an IAB donor (IAB donor), a donor IAB, a donor, a donor gNB (donor gNB, DgNB), or the like. Alternatively, the access network device may be a network node that constitutes a gNB or a transmission point, for example, a baseband unit (BBU) or a distributed unit (DU, distributed unit). Alternatively, the access network device may be a radio controller in a cloud radio access network (cloud radio access network, CRAN) scenario, may be a base station in a future communication network or an access network device in a future evolved PLMN network, or may be a wearable device or a vehicle-mounted device.

Main functions of the access network device include: radio resource management, internet protocol (internet protocol, IP) header compression and user data flow encryption, mobility management entity (mobility management entity, MME) selection during attachment of user equipment, routing of user plane data to a serving gateway (service gateway, S-GW), paging message organization and sending, broadcast message organization and sending, measurement for a purpose of mobility or scheduling, and measurement report configuration, and the like.

In the 5G communication system, the access network device is similar to a base station in a conventional network, is deployed near the terminal device, provides a network access function for an authorized user in a specific area, and can determine, based on a user level, a service requirement, and the like, transmission tunnels of different quality, to perform transmission of user data. The access network can manage resources of the access network, properly use the resources, provide an access service for the terminal device as needed, and is responsible for forwarding a control signal and user data between the terminal device and the core network.

In embodiments of this application, the core network device may be connected to one or more access network devices. The core network device is responsible for maintaining subscription data of a mobile network, managing a network element of the mobile network, and providing session management, mobility management, policy management, security authentication, and other functions for the terminal device. For example, the core network device provides network access authentication for the terminal device when the terminal device is attached; allocates a network resource to the terminal device when the terminal device has a service request; updates a network resource for the terminal device when the terminal device moves; provides a fast recovery mechanism for the terminal device when the terminal device is idle; releases a network resource for the terminal device when the terminal device is detached; and provides a data routing function for the terminal device when the terminal device has service data, for example, in the 5G communication system, forwards uplink data to the data network device, or forwards downlink data received from the data network device to the access network device, so that the access network device sends the downlink data to the terminal device.

In different communication systems, the core network device may correspond to different devices. For example, in a 3G communication system, the core network device may correspond to a serving GPRS support node (serving GPRS support node, SGSN) and/or a gateway GPRS support node (gateway GPRS support node, GGSN); in a 4G communication system, the core network device may correspond to an MME and/or a serving gateway (serving gateway, S-GW); and in the 5G communication system, the core network device may correspond to an access and mobility management function (access and mobility management function, AMF) network element, a session management function (session management function, SMF) network element, or a user plane function (user plane function, UPF) network element.

The data network device is configured to provide a service for a user. Generally, a client is the terminal device, and a server is the data network device. A data network provided by the data network device may be a private network like a local area network. The data network may alternatively be an external network that is not managed and controlled by an operator, for example, the Internet. The data network may alternatively be a dedicated network jointly deployed by operators, for example, a network that provides an IP multimedia subsystem (IP multimedia subsystem, IMS) service.

To provide a specific network function and a specific network feature, a network slice (network slice) technology may be used to divide a physical network into a plurality of virtual end-to-end virtual networks. Each virtual network obtained through division, including a device, an access technology, a transmission path, a core network, and the like in the virtual network, is logically independent. In this way, each network slice is formed by instantiating an independent network function or a combination of functions. The network slices are separated from each other, so that different users or user groups can flexibly and dynamically customize a network capability based on different application scenarios and requirements.

In the 5G communication system, the network slice technology may be used to implement network function separation, to be specific, separation between a control plane (control plane, CP) function and a user plane (user plane, UP) function, to meet wide and changing service requirements. A network slice includes a control plane function (control plane function, CPF) network element and a UPF network element. The CPF network element mainly completes functions such as access authentication, security encryption, and location registration of the terminal device, and completes functions such as establishment, release, and modification of a user plane transmission path. The UPF network element mainly completes functions such as routing and forwarding of user plane data. In FIG. 1, an NG2 reference point may be located between a control plane of the access network device and a control plane of the core network device, an NG3 reference point may be located between a user plane of the access network device and a user plane of the core network device, and an NG6 reference point may be located between the user plane of the core network device and a user plane of the data network.

The control plane of the core network uses a service-oriented architecture. Control plane function network elements interact with each other in a service invoking manner to replace a point-to-point communication mode in a conventional architecture. In the service-oriented architecture, the control plane function network element exposes a service to another control plane function network element for invoking by the another control plane function network element. In point-to-point communication, a set of specific messages exist in a communication interface between the control plane function network elements, and can be used only by control plane function network elements at two ends of the interface during communication.

FIG. 2 is a diagram of an architecture of another communication system according to an embodiment of this application. As shown in FIG. 2, the communication system may include a terminal device, a data network device, a (radio) access network device, and function entities of a core network device. The function entities of the core network device may include a user plane function network element, configured to perform packet routing and forwarding, quality of service (quality of service, QoS) processing on user plane data, and the like. The user plane function network element may forward a user data packet according to a routing rule of a session management function network element, for example, send uplink data to the data network or another user plane function network element, and forward downlink data to another user plane function network element or the (R)AN network element. The user plane function network element may be a UPF network element in a 5G communication system.

The function entities of the core network device may further include control plane function network elements such as an authentication service function network element, an access and mobility management function network element, a session management function network element, a network slice selection function network element, a network exposure function network element, a network repository function network element, a policy control function network element, a data management network element, and an application function network element. The following describes a function of each function entity. Specifically:
The authentication service function network element is configured to perform an authentication service, generate a key to implement two-way authentication on the terminal device, support a unified authentication framework, and perform security authentication on the terminal device. An authentication server may be an authentication service function (authentication server function, AUSF) network element in the 5G communication system.

The access and mobility management function network element is configured to implement access management and mobility management of the terminal device. For example, the access and mobility management function network element is responsible for status maintenance of the terminal device, reachability management of the terminal device, forwarding of a non-mobility management (mobility management, MM) non-access-stratum (non-access-stratum, NAS) message, forwarding of a session management (session management, SM) N2 message, and the like. The access and mobility management function network element may be an AMF network element in the 5G communication system.

The session management function network element is configured to implement session management of the terminal device, and allocate and release a resource for a session of the terminal device. The resource includes a resource preset parameter QoS, a session path, a forwarding rule, and the like. The session management function network element may be an SMF network element in the 5G communication system.

The network slice selection function network element is configured to select a network slice for the terminal device. The network slice selection function network element may be a network slice selection function (network slice selection function, NSSF) network element in the 5G communication system.

The network exposure function network element exposes a network function to a third party through a northbound API interface. The network exposure function network element may be a network exposure function (network exposure function, NEF) network element in the 5G communication system.

The network repository function network element is configured to provide a storage function and a selection function of network function entity information for another network element. The network repository function network element may be referred to as a network function repository function (network function repository function, NRF) network element in the 5G communication system.

The data management network element is configured to implement user subscription context management, for example, store subscription information of the terminal device. The data management network element may be referred to as a unified data management (unified data management, UDM) network element in the 5G communication system.

The policy control function network element is configured to implement user policy management. Similar to a policy and charging rules function (policy and charging rules function, PCRF) network element in LTE, the policy control function network element is mainly responsible for policy authorization, generation of quality of service and charging rules, and delivery of a corresponding rule to the UPF network element via the SMF network element, to complete installation of a corresponding policy and rule. The policy control function network element may be a policy control function (policy control function, PCF) network element in the 5G communication system.

The application function network element may be a third-party application control platform, or may be a device of an operator. The application function network element is configured to implement application management, and may provide services for a plurality of application servers. The application function network element may be an application function (application function, AF) network element in the 5G communication system.

It should be noted that, that the AMF, the SMF, the UDM, and the like are referred to as network elements in embodiments of this application is merely an example. In practice, the network elements may be network elements implemented on dedicated hardware, may be software instances running on dedicated hardware, or may be instances of virtualization functions on an appropriate platform. For example, the foregoing virtualization platform may be a cloud platform. In a future communication system, the foregoing network elements may have other names. This is not limited in this application.

In the 5G communication system, data transmission between the AMF network element and the terminal device may be performed through an N1 interface, and data transmission between the AMF network element and the (R)AN network element may be performed through an N2 interface. Data transmission between the (R)AN network element and the UPF network element may be performed through an N3 interface, data transmission between the UPF network element and the SMF network element may be performed through an N4 interface, and data transmission between the UPF network element and the data network device may be performed through an N6 interface. The function entity of the core network may perform data transmission by using an HTTP/TCP protocol through a service-based interface (service-based interface, SBI) of the function entity. For example, Nnssf is an interface based on an NSSF service, Nausf is an interface based on an AUSF service, and Namf is an interface based on an AMF service. The foregoing N1, N2, N3, N4, and N6 may also be referred to as NG1, NG2, NG3, NG4, and NG6.

It should be noted that a distribution form of network elements in the core network is not limited in embodiments of this application. The distribution form shown in FIG. 2 is merely an example, and is not limited in this application. A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

In embodiments of this application, information (information), signal (signal), message (message), and channel (channel) may be interchangeably used sometimes. It should be noted that meanings expressed by the terms are consistent when differences between the terms are not emphasized. The terms "of (of)", "relevant (relevant)", and "corresponding (corresponding)" may be interchangeably used sometimes. It should be noted that meanings expressed by the terms are consistent when differences between the terms are not emphasized.

In most of the following descriptions, an example in which UE is a terminal device is used for description, and the terminal device may be referred to as a terminal for short. The core network in embodiments of this application may be understood as a core network device or a network provided by the core network device. The access network may be understood as an access network device or a network provided by the access network device.

The following first provides definitions of technical terms that may occur in embodiments of this application. Terms used in implementations of this application are only used to explain specific embodiments of this application, but are not intended to limit this application.
(1) Paging (paging) is used to notify a terminal device in an idle (idle) state or an inactive (inactive) state to establish a mobile terminated service; or notify the terminal device that a system message of a communication system changes, and the terminal device needs to re-read a changed system broadcast message; or notify the terminal device to receive earthquake and tsunami warning system (earthquake and tsunami warning system, ETWS) information. Based on an initiator of a paging message, paging is classified into CN paging initiated by the core network and RAN paging initiated by the access network. The CN paging is mainly used to page a terminal in an idle state, and the RAN paging is used to page a terminal in an inactive state.
(2) A discontinuous reception (discontinuous reception, DRX) technology is used for periodical paging message monitoring. Based on a source of the paging message, a DRX configuration for the paging message may be classified into an idle discontinuous reception paging message (idle DRX for CN paging) configuration (which may be referred to as an idle DRX configuration for short) and a non-idle discontinuous reception paging message (inactive DRX for RAN paging) configuration (which may be referred to as an inactive DRX configuration for short). Duration of periodical monitoring by the terminal device may be referred to as a DRX cycle, for example, 1.28s or 2.56s. When the DRX cycle expires, the terminal device may be woken up, and is configured to monitor the paging message.
   For example, a base station sends a default DRX configuration of a network to the UE by using a system information block type 1 (system information block type 1, SIB1). If the UE needs to use a specific (specific) idle DRX configuration, the UE may negotiate with the core network by using NAS signaling, and the UE monitors the paging message by using a smaller one between a specific discontinuous reception cycle configured by the core network device (specific DRX cycle configured by CN) and a default DRX configuration cycle configured in the SIB1 (default DRX cycle configured by SIB1). If the UE needs to use a specific inactive DRX configuration, the base station may provide a specific cycle when releasing the UE to the inactive state. Specially, in this case, the UE in the inactive state needs to monitor a CN paging message by using the idle DRX configuration.
(3) An extended discontinuous reception (extended discontinuous reception, eDRX) technology prolongs the DRX cycle, and increases sleep duration of the terminal device, so that electric energy consumption is further reduced. For an idle state eDRX configuration, an eDRX cycle may be extended to more than 3 hours with reference to eDRX in LTE. In addition, at least one paging time window (paging time window, PTW) is set in an eDRX cycle other than 5.12s and 10.24s. The terminal device monitors a paging channel in the PTW based on the DRX cycle, to receive downlink data. In other time, the terminal device is in a sleep state and does not receive downlink data. For an inactive state eDRX configuration, only a case in which the eDRX cycle is not greater than 10.24s is discussed. Use of the eDRX cycle is the same as use of the DRX cycle. The terminal device is woken up at an interval of an inactive state eDRX cycle, to monitor the paging message.

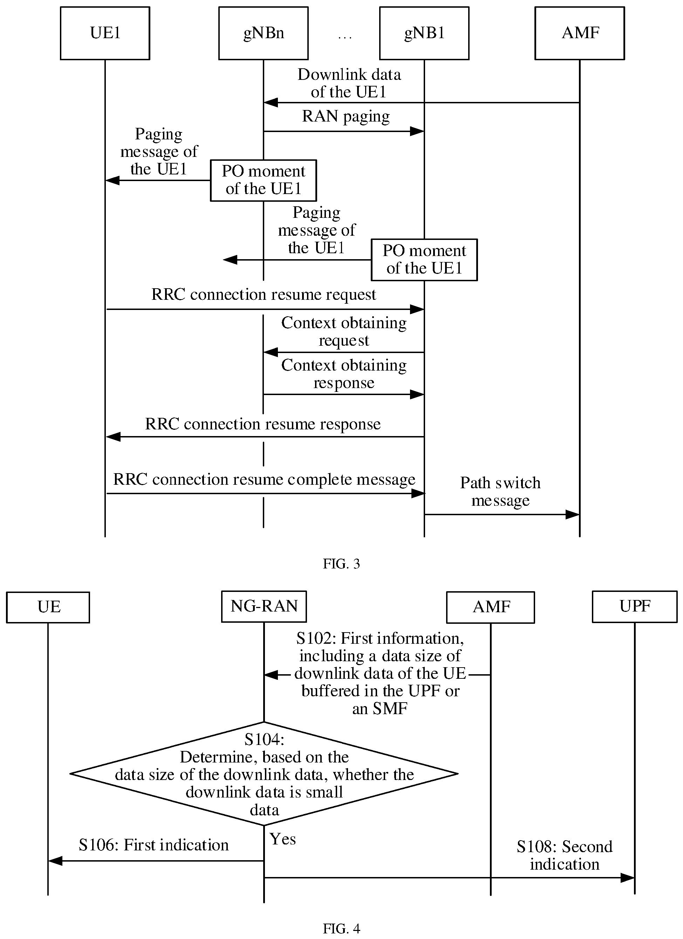

FIG. 3 is a schematic flowchart of a RAN paging method according to a conventional technology. In FIG. 3, an example in which an access network is a gNB and a terminal is UE1 is used. As shown in FIG. 3, a gNBn may be referred to as a last serving base station (last serving gNB), and the last serving base station is a base station that releases UE to an RRC inactive state. The last serving base station and (n-1) gNBs other than the gNBn, for example, a gNB1, are all receiving base stations (receiving gNBs) in a RAN notification area of the UE1. n may be greater than or equal to 2.

In the paging method shown in FIG. 3, an AMF sends downlink data of the UE1 to the gNBn. After receiving the downlink data of the UE1, the gNBn may send a paging message to the (n-1) receiving base stations through an Xn interface, so that the (n-1) receiving base stations can initiate RAN paging. The gNBn also initiates RAN paging. If obtaining, on a paging occasion (paging occasion, PO), a paging message for the UE1 through monitoring, the UE1 responds to the paging message, and initiates an RRC connection resume request to a base station, for example, the gNB1 on which the UE1 currently camps. Then, the gNB1 sends a context obtaining request to the gNBn, to obtain a context of the UE1 from a context obtaining response sent by the gNBn. The gNB1 may send an RRC connection resume response to the UE1 based on the context, to acknowledge the RRC connection resume request. After establishing a connection to the gNB1, the UE1 sends an RRC connection resume complete message to the gNB1, to indicate that the UE1 has completed connected state resumption. Then, the gNB 1 may send a path switch (path switch) message to the AMF, to indicate that a switch path of the access network of the UE1 changes.

For a case in which an inactive state eDRX cycle is greater than 10.24s, a PTW may be introduced with reference to an idle state eDRX technology, so that the terminal device can stay in a sleep state for longer time. In addition, to avoid that excessively long sleep time causes an excessively large amount of data to be buffered in the access network device or a signaling timeout, the data to be buffered in the access network device may be buffered in a UPF network element, and signaling countdown time is adjusted. In this case, before delivering, to the UE, an inactive state eDRX configuration like an eDRX cycle greater than 10.24s, an NG-RAN needs to notify a core network device of the eDRX configuration, so that the core network device learns of reachability time of the UE when the UE wakes up and monitors paging next time. If the core network device receives data or signaling indicated to be sent to the UE, the core network device may send a message to the access network device through an N2 interface after the reachability time arrives, and the access network device may start RAN paging. The UE responds to the RAN paging to resume an RRC connection, and the access network device notifies the UPF not to buffer the data of the terminal device any longer. In this case, the core network may perform data or signaling transmission. However, in this case, the UE is able to perform data transmission only after entering a connected state. An RRC connection resume process performed by the UE causes large signaling overheads and takes long time, and there is a delay in data or signaling transmission.

(4) In a small data transmission (small data transmission, SDT) technology in NR, based on a resource used for SDT transmission, the SDT may be classified into SDT based on a random access channel (random access channel, RACH) and SDT based on a configured grant type 1 (configured grant type1, Type1 CG) in a physical uplink shared channel (physical uplink shared channel, PUSCH). After the SDT technology is used, if receiving SDT data or signaling from the terminal device in the INACTIVE state, the access network device may directly forward small data to the core network device. In this way, small packet transmission of the terminal device in the inactive state may be implemented, in other words, data transmission may be implemented in a non-connected state. This increases time for the terminal device to stay in the non-connected state, and reduces signaling overheads caused by a status switching process. However, in existing NR, only mobile originated (mobile originated, MO) SDT is considered, and mobile terminated (mobile terminated, MT) SDT is not included.

(5) An MT early data transmission (early data transmission, EDT) technology in LTE enables a terminal device to transmit an uplink small data packet or receive a downlink small data packet without entering the connected state. A control plane-based MT EDT process is used as an example. After the UE exchanges an MT EDT support capability with the CN by using NAS signaling, an MME sends a paging message to an eNB after receiving downlink data size information from an S-GW. The paging message carries the downlink data size information, and is used to assist the eNB in making a decision about whether the MT EDT needs to be performed. Transmission of the paging message may be performed according to an S1 application protocol (application protocol, AP). If the eNB makes a decision that the MT EDT needs to be performed, an MT EDT identifier is carried in a paging message sent by the eNB to the UE, to indicate the UE to perform a control plane-based MO EDT process. However, the EDT technology is used to support idle state MT EDT, and cannot be directly reused to a scenario in which inactive state eDRX is greater than 10.24s.

In conclusion, for the case in which the inactive state eDRX cycle is greater than 10.24s, if the PTW is introduced with reference to the idle state eDRX technology and data is buffered in the UPF, the UE is able to perform data transmission only after entering the connected state. The SDT technology and the EDT technology can be used for data transmission in the non-connected state. However, the SDT technology does not support MT SDT transmission, and the EDT technology cannot be directly reused to the scenario in which the inactive state eDRX is greater than 10.24s.

Based on this, this application provides a communication method, to support a terminal device in remaining in an inactive state and performing data or signaling transmission, so that power consumption caused by RRC state switching performed by the terminal device can be reduced. FIG. 4 is a schematic flowchart of a first communication method according to an embodiment of this application. Communication apparatuses in the communication method may include a terminal device, an access network device, an access and mobility management function network element, a session management function network element, a user plane function network element, and the like. Specifically, a paging process initiated by an access network side on the assumption that a core network side and the access network side do not exchange SDT support capabilities of the access network side and a terminal device is described by using as an example in which apparatuses in a 5G communication system are function entities. For example, the terminal device is UE, an access network device is an NG-RAN, an access and mobility management function network element is an AMF, a session management function network element is an SMF, and a user plane function network element is a UPF. It should be understood that downlink data of the UE may be buffered in at least one UPF, and each UPF may perform the same communication method provided in this application. In FIG. 4, one UPF is used as an example for description. The UE in the communication method is in an inactive state, and an eDRX cycle is configured by the NG-RAN for the UE. In some feasible examples, the eDRX cycle may be duration of 10.24s, duration greater than 10.24s, or the like. This is not limited herein. The communication method includes the following steps.

S102: The AMF sends first information to the NG-RAN.

Correspondingly, the NG-RAN receives the first information from the AMF.

The first information carries a data size of the downlink data of the UE buffered in the UPF or the SMF, for example, DL data size info. The data size of the downlink data of the UE is used by the NG-RAN to perform SDT decision-making, to be specific, to determine whether the downlink data of the UE buffered in the UPF is small data, which is content in step S104. The first information may further include a data type of the downlink data, and the like. This is not limited herein. The first information may be an N2 message exchanged between the AMF and the NG-RAN. In addition, the NG-RAN in step S102, step S104, and step S108 may be a last serving base station that releases the UE to the RRC inactive state.

S104: The NG-RAN determines, based on the data size of the downlink data, whether the downlink data is small data.

Optionally, if determining, based on the data size of the downlink data, that the downlink data is small data, the NG-RAN performs subsequent steps such as step S106 and step S108. If determining, based on the data size of the downlink data, that the downlink data is not small data, the NG-RAN may send, to a core network, for example, the AMF or the UPF, an indication indicating not to perform data transmission for the UE, or may not perform a subsequent step.

In some feasible examples, step S104 may include: If the data size of the downlink data is less than a capacity threshold, determine that the downlink data is small data.

The capacity threshold is not limited in this application. The capacity threshold may be determined with reference to a maximum value of small data specified in a communication standard, or may be determined based on a network rate, a network resource, and the like of an NG-RAN in a current communication system. It may be understood that, in this example, whether the downlink data is small data is determined depending on whether the data size of the downlink data is less than the capacity threshold, so that accuracy of determining small data can be improved.

S106: The NG-RAN sends a first indication to the UE.

Correspondingly, the UE receives the first indication from the NG-RAN.

The first indication may indicate the UE to perform small data transmission. It should be noted that the NG-RAN in step S 106 may be another base station other than the last serving base station in a RAN notification area in which the UE is located. In other words, the another base station may first receive the first indication or a message carrying the first indication from the last serving base station, and then send another message carrying the first indication to the UE. The message carrying the first indication and the another message carrying the first indication may be understood as paging messages carrying small data transmission indication information, for example, RAN paging with SDT indication. It may be understood that, after determining that the downlink data is small data, the NG-RAN may send the first indication to the UE, so that the UE prepares to perform small data transmission. This helps improve a communication success rate.

S108: The NG-RAN sends a second indication to the AMF or the UPF.

Correspondingly, the AMF receives the second indication from the NG-RAN. Alternatively, the UPF receives the second indication from the NG-RAN.

The second indication indicates the UPF to send the small data to the NG-RAN. In other words, the UPF sends, to the NG-RAN, the downlink data (used as small data) of the UE buffered in the UPF.

In some feasible examples, the second indication may be another N2 message exchanged between the AMF and the NG-RAN. After the AMF receives the second indication, the method may further include: The AMF sends a session update request to the SMF.

Correspondingly, the SMF receives the session update request from the AMF.

The SMF may be an SMF associated with the UE. The session update request is used to request to update a session status of a protocol data unit (protocol data unit, PDU) session established with the UE. After receiving the session update request, the SMF updates the status of the PDU session, and updates an associated UPF rule, so that the UPF no longer buffers the downlink data of the UE, and the UPF sends the downlink data used as small data to the NG-RAN.

In some other feasible examples, the second indication may be an N3 message exchanged between the NG-RAN and the UPF. After receiving the second indication, the UPF may be indicated not to buffer the downlink data of the UE any longer, and send the downlink data used as small data to the NG-RAN.

In the communication method shown in FIG. 4, when the access network device configures the eDRX cycle for the terminal device in the inactive state, if receiving the first information from the AMF, the NG-RAN may determine, based on the data size of the downlink data carried in the first information, whether the downlink data is small data. If the downlink data is small data, the NG-RAN may send the first indication to the UE, so that the UE performs small data transmission. The NG-RAN may further send the second indication to the AMF or the UPF, so that the UPF sends, to the NG-RAN, the downlink data determined as small data. In this way, the access network device may make a decision about whether to perform small data transmission. If the access network device makes a decision to perform small data transmission, when an inactive state eDRX cycle is configured for the terminal device, the terminal device remains in the inactive state and performs data or signaling transmission, so that power consumption caused by RRC state switching performed by the terminal device is reduced.

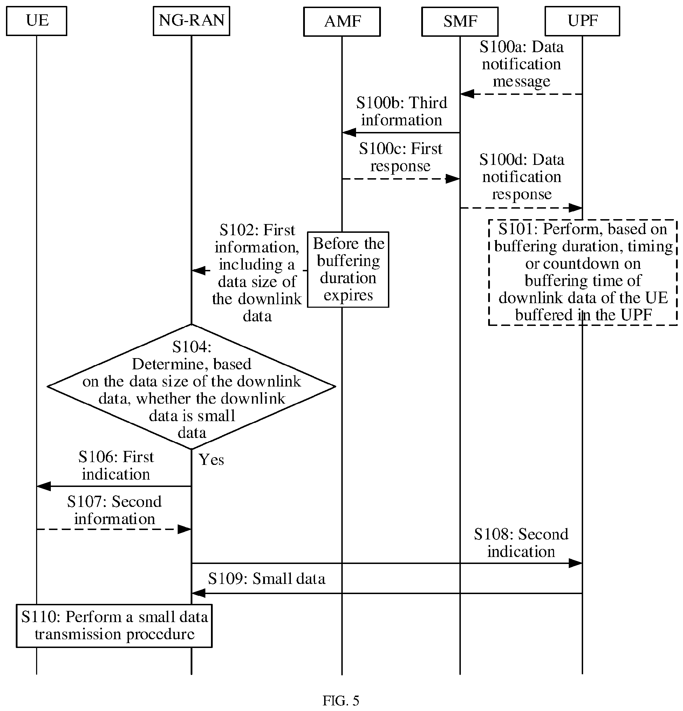

Further, FIG. 5 is a schematic flowchart of a second communication method according to an embodiment of this application. Communication apparatuses in the communication method may include a terminal device, an access network device, an access and mobility management function network element, a session management function network element, a user plane function network element, and the like. Specifically, reference may be made to descriptions in FIG. 4. A paging process initiated by an access network side on the assumption that a core network side and the access network side do not exchange an SDT support capability of the access network side is described by using an example including function entities such as UE, an NG-RAN, an AMF, an SMF, and a UPF, and one UPF is used as an example. The UE in the communication method is in an inactive state, and an eDRX cycle is configured by the NG-RAN for the UE. In some feasible examples, the eDRX cycle may be duration of 10.24s, duration greater than 10.24s, or the like. This is not limited herein. The second communication method may include the first communication method. Before step S102, the method may further include but is not limited to the following step S100a to step S100d and step S101.

S100a: The UPF sends a data notification message to the SMF.

Correspondingly, the SMF receives the data notification message from the UPF.

The data notification message, for example, Data Notification, may indicate that the UPF buffers downlink data of the UE. In step S100a, the data notification message may be sent after the UPF receives the downlink data of the UE, when buffering duration expires, or the like. The data notification message may carry a data size of the downlink data.

S 100b: The SMF sends third information to the AMF.

Correspondingly, the AMF receives the third information from the SMF.

The third information may carry the data size of the downlink data of the UE buffered in the UPF or the SMF. The data size of the downlink data may be used to determine whether the downlink data is small data. Transmission of the third information and the following first response may be performed by using a Namf message exchanged between the AMF and the SMF. For example, the third information may be Namf_MT_EnableUEReachability request, and the first response may be Namf_MT_EnableUEReachability response.

S100c: The AMF sends the first response to the SMF.

The first response may be a response message of the third information. The first response may carry the buffering duration (timer) of the downlink data. The buffering duration is not limited in this application, and may be determined by a core network device (for example, the AMF) based on reachability time of the UE when the UE wakes up and performs paging next time. For example, the buffering duration is greater than or equal to the reachability time of the UE. The first response may indicate to discard the downlink data when the buffering duration of the downlink data of the UE buffered in the UPF expires, to clear buffered data in a timely manner, and avoid occupying a resource of the UPF.

S100d: The SMF sends a data notification response to the UPF.

Correspondingly, the UPF receives the data notification response from the SMF.

The data notification response may be a response message of the data notification message. The data notification response may include the buffering duration, and indicate the UPF to discard the downlink data when the buffering duration of the downlink data of the UE expires.

S101: The UPF performs, based on the buffering duration, timing or countdown on buffering time of the downlink data of the UE buffered in the UPF.

As shown in FIG. 5, step S102 may be performed before the buffering duration expires. After step S102 is performed, step S104 and step S106 may be performed. After step S106 is performed and before step S108 is performed, the method may further include step S107: The UE sends second information to the NG-RAN.

Correspondingly, the NG-RAN receives the second information from the UE.

The second information is used to confirm that the UE is able to perform data transmission with the core network device, or is used to confirm that the UE performs connection resumption. The second information may be a complete message sent by the UE after the UE starts a RACH process and resumes a connection to the access network device, for example, RRC Resume complete. Alternatively, the second information may be a request for resuming a connection between the UE and the access network device, for example, RRC Resume request. It may be understood that after receiving the second information, the NG-RAN may determine that the UE can communicate with the core network device, and then perform step S108 to send a second indication to the AMF or the UPF, so that the UPF sends, to the NG-RAN, the downlink data of the UE buffered in the UPF and used as small data. This helps improve a communication success rate.

As shown in FIG. 5, after step S108, the method may further include step S109 and step S110.

S109: The UPF sends the small data to the NG-RAN.

Correspondingly, the NG-RAN receives the small data from the UPF.

S110: The UE and the NG-RAN perform a small data transmission procedure.

The small data transmission procedure is not limited in this application, and may be an SDT procedure based on a RACH, an SDT procedure based on a Type1 CG in a PUSCH, or the like. Optionally, a restriction of data transmission is considered. For example, if a reference signal received power (reference signal received power, RSRP) is greater than a start threshold, the small data transmission procedure is performed. If the reference signal received power is not greater than the start threshold, step S110 is not performed.

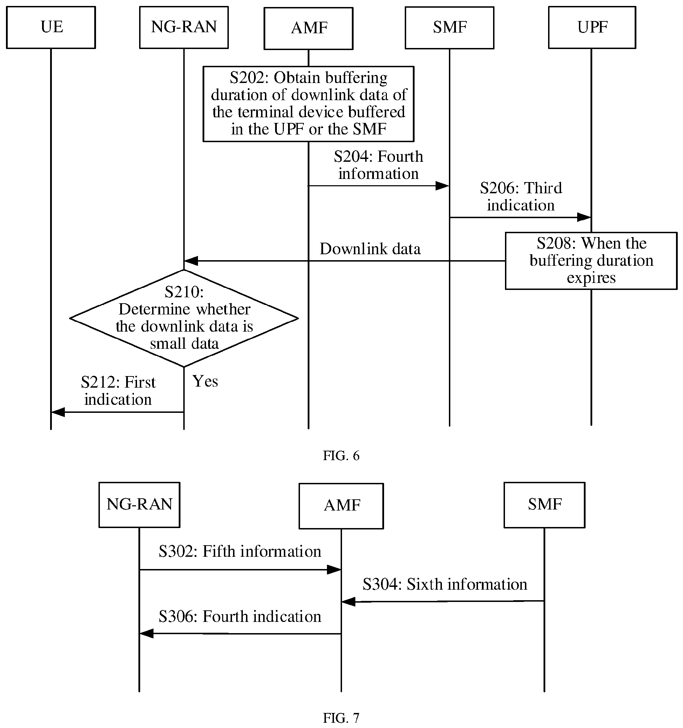

FIG. 6 is a schematic flowchart of a third communication method according to an embodiment of this application. Communication apparatuses in the communication method may include a terminal device, an access network device, an access and mobility management function network element, a session management function network element, a user plane function network element, and the like. Specifically, reference may be made to descriptions in FIG. 4. A paging process initiated by an access network side on the assumption that a core network side and the access network side do not exchange an SDT support capability of the access network side is described by using an example including function entities such as UE, an NG-RAN, an AMF, an SMF, and a UPF, and one UPF is used as an example. The UE in the communication method is in an inactive state, and an eDRX cycle is configured by the NG-RAN for the UE. In some feasible examples, the eDRX cycle may be duration of 10.24s, duration greater than 10.24s, or the like. This is not limited herein. The communication method includes but is not limited to the following steps.

S202: The AMF obtains buffering duration of downlink data of the terminal device buffered in the UPF or the SMF.

In some feasible examples, step S202 may include: The AMF obtains, based on an eDRX configuration of the UE, the buffering duration of the downlink data of the terminal device buffered in the UPF or the SMF.

The eDRX configuration may include the eDRX cycle configured by the NG-RAN. It should be noted that time of the buffering duration herein may be the same as or different from time of the buffering duration in FIG. 4 and FIG. 5, and the buffering duration may be equal to reachability time of the UE. The buffering duration in FIG. 6 indicates the reachability time of the UE, so that data transmission can be performed when the buffering duration expires, to send the downlink data of the UE to the NG-RAN.

S204: The AMF sends fourth information to the SMF.

Correspondingly, the SMF receives the fourth information from the AMF. The fourth information may carry the buffering duration of the downlink data.

S206: The SMF sends a third indication to the UPF.

Correspondingly, the UPF receives the third indication from the SMF. The third indication may include the buffering duration, and indicates the UPF to send, when the buffering duration of the downlink data of the UE buffered in the UPF or the SMF expires, the downlink data to the NG-RAN.

S208: When the buffering duration of the downlink data of the UE buffered in the UPF or the SMF expires, the UPF sends the downlink data to the NG-RAN.

Correspondingly, when the buffering duration of the downlink data of the UE buffered in the UPF or the SMF expires, the NG-RAN receives the downlink data from the UPF.

S210: The NG-RAN determines whether the downlink data is small data.

If determining that the downlink data is small data, the NG-RAN performs subsequent step S212: The NG-RAN sends a first indication to the UE. Correspondingly, the UE receives the first indication from the NG-RAN. The first indication may indicate the UE to perform small data transmission. For step S212, refer to descriptions of step S106. This is not limited herein. Optionally, if determining that the downlink data is not small data, the NG-RAN may send, to a core network, for example, the AMF or the UPF, an indication indicating not to perform data transmission for the UE, or may not perform a subsequent step.

A method for determining whether the downlink data is small data is not limited in this application. The method may be determining whether a data size of the downlink data is less than a capacity threshold. Alternatively, the method may be identifying whether an identifier in the downlink data is an identifier of small data. For example, a 5G core network establishes one or more protocol data unit (protocol data unit, PDU) sessions for each UE, and a QoS flow is identified in the PDU session by using a quality of service (quality of service, QoS) flow identifier (QoS flow identifier, QFI). The QoS flow is mapped, in an accessed radio access network, to a data radio bearer (data radio bearer, DRB). Therefore, whether a DRB carrying downlink data is an SDT-associated DRB may be learned by using a QFI corresponding to a QoS flow, to make a decision about whether data in the QoS flow is small data. If the DRB corresponding to the QoS flow is an SDT-associated DRB, it is determined that the data in the QoS flow is small data.

In the communication method described in FIG. 6, when the access network device configures the eDRX cycle for the terminal device in the inactive state, the AMF first obtains the buffering duration of the downlink data of the UE buffered in the UPF or the SMF. When the buffering duration of the downlink data of the UE buffered in the UPF expires, the UPF may consider that the UE is reachable, and send the downlink data to the NG-RAN. Then, the NG-RAN determines whether the downlink data is small data. If the downlink data is small data, the NG-RAN sends the first indication to the UE, to indicate the UE to perform small data transmission. In this way, the access network device may make a decision that transmission of the downlink data used as small data is performed when the buffering duration of the downlink data of the terminal device expires, so that when an inactive state eDRX cycle is configured for the terminal device, the terminal device remains in the inactive state and performs data or signaling transmission. This reduces power consumption caused by RRC state switching performed by the terminal device.

In some feasible examples, before step S202, the method may further include: The UPF sends a data notification message to the SMF.

Correspondingly, the SMF receives the data notification message from the UPF.

The data notification message, for example, Data Notification, may indicate that the UPF buffers the downlink data of the UE. For this step, refer to descriptions of step S100a. The data notification message may be sent after the UPF receives the downlink data of the UE, when the buffering duration expires, or the like. Details are not described herein again.

In some feasible examples, before step S202, the method may further include: The SMF sends a first request to the AMF.

Correspondingly, the AMF receives the first request from the SMF.

The first request may be used to request the AMF to obtain the buffering duration of the downlink data of the UE. Transmission of the first request and the fourth information may be performed by using a Namf message exchanged between the AMF and the SMF. For example, the first request may be Namf_MT_EnableUEReachability request, and the fourth information may be Namf_MT_EnableUEReachability response.

In some feasible examples, after step S206, the method may further include: The UPF performs, based on the buffering duration, timing or countdown on buffering time of the downlink data of the UE buffered in the UPF.

In some feasible examples, after step S212, the method may further include: The UE and the NG-RAN perform a small data transmission procedure. For this step, refer to descriptions of step S110. Details are not described herein again.

FIG. 7 is a schematic flowchart of a fourth communication method according to an embodiment of this application. Communication apparatuses in the communication method may include a terminal device, an access network device, an access and mobility management function network element, a session management function network element, a user plane function network element, and the like. Specifically, reference may be made to descriptions in FIG. 4. A paging process initiated by a core network side on the assumption that the core network side and an access network side can exchange SDT support capabilities of the terminal device and the access network side is described by using an example including function entities such as UE, an NG-RAN, an AMF, an SMF, and a UPF, and one UPF is used as an example. The UE in the communication method is in an inactive state, and an eDRX cycle is configured by the NG-RAN for the UE. **In** some feasible examples, the eDRX cycle may be duration of 10.24s, duration greater than 10.24s, or the like. This is not limited herein. The communication method may include the following steps.

S302: The NG-RAN sends fifth information to the AMF.

Correspondingly, the AMF receives the fifth information from the NG-RAN.

The fifth information may be an N2 message exchanged between the AMF and the NG-RAN. The N2 message may be a newly defined message, or may be an existing message, for example, a message obtained by improving RRC INACTIVE TRANSITION REPORT. The fifth information may carry the eDRX cycle configured by the NG-RAN for the UE in the inactive state, or may include capability information of the UE. Further, the fifth information may include the SDT support capability of the UE. Alternatively, the fifth information may indicate to the AMF that the NG-RAN, as a target access network device, supports SDT, and the like. This is not limited herein.

The fifth information is used to determine whether the UE and the NG-RAN support small data transmission, and may further indicate the AMF to calculate reachability time of the UE, to determine whether the UPF buffers downlink data of the UE, and the like. A method for determining that the UE and the NG-RAN support small data transmission is not limited in this application. The AMF may determine, based on the capability information of the UE, whether the UE supports small data transmission. If the fifth information does not carry the capability information of the UE, the AMF may obtain the capability information of the UE by using context information of the UE or other information. The AMF may further determine, by using a previously received N2 message, for example, NG Setup, whether the NG-RAN supports small data transmission. Alternatively, the AMF determines, based on the NG-RAN being the target access network device supporting SDT, which is indicated in the fifth information, that the NG-RAN supports small data transmission.

S304: The AMF receives sixth information from the SMF.

Correspondingly, the SMF sends the sixth information to the AMF.

The sixth information may be used to determine that the downlink data of the UE buffered in the UPF is small data. The sixth information may include one piece of indication information, indicating that the downlink data of the UE buffered in the UPF is small data. The indication information may be obtained through decision-making by the SMF. The sixth information may alternatively include a data size of the downlink data, so that the AMF may determine, based on the data size of the downlink data, whether the downlink data is small data. For a method for determining, by the SMF and the AMF, whether the downlink data is small data, refer to descriptions in step S104. Details are not described herein again.

S306: The AMF sends a fourth indication to the NG-RAN.

Correspondingly, the NG-RAN receives the fourth indication from the AMF.

The fourth indication may indicate the NG-RAN to perform small data transmission.

In the communication method shown in FIG. 7, when the access network device configures the eDRX cycle for the terminal device in the inactive state, if receiving the fifth information from the NG-RANF and receiving the sixth information from the SMF, the AMF may send the fourth indication to the NG-RAN, so that the small data of the UE buffered in the UPF or the SMF can be sent to the UE via the NG-RAN. In this way, a core network device may make a decision about whether to perform small data transmission. If the core network device makes a decision to perform small data transmission, when an inactive state eDRX cycle is configured for the terminal device, the terminal device remains in the inactive state and performs data or signaling transmission, so that power consumption caused by RRC state switching performed by the terminal device is reduced.

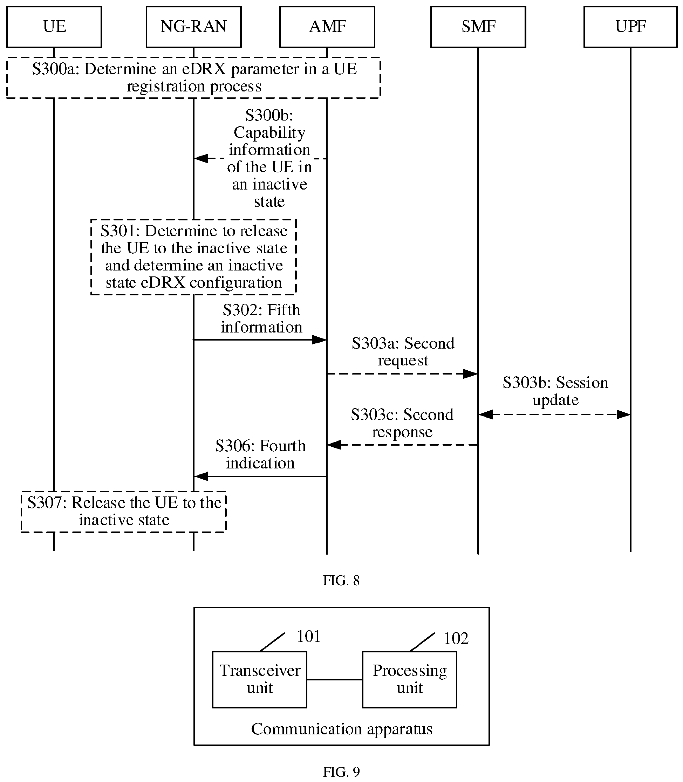

Further, FIG. 8 is a schematic flowchart of a fifth communication method according to an embodiment of this application. Communication apparatuses in the communication method may include a terminal device, an access network device, an access and mobility management function network element, a session management function network element, a user plane function network element, and the like. Specifically, reference may be made to descriptions in FIG. 4. A paging process initiated by a core network side on the assumption that the core network side and an access network side can exchange SDT support capabilities of the terminal device and the access network side is described by using an example including function entities such as UE, an NG-RAN, an AMF, an SMF, and a UPF, and one UPF is used as an example. The UE in the communication method is in an inactive state, and an eDRX cycle is configured by the NG-RAN for the UE. In some feasible examples, the eDRX cycle may be duration of 10.24s, duration greater than 10.24s, or the like. This is not limited herein. The fifth communication method may include the fourth communication method. Before step S302, the method may further include but is not limited to the following step S300a, step S300b, and step S301.

S300a: The NG-RAN and the AMF determine an eDRX parameter in a UE registration process.

The eDRX parameter may include the eDRX cycle and the like. This is not limited herein.

S300b: The AMF sends, to the NG-RAN, capability information of the UE in the inactive state.

Correspondingly, the NG-RAN receives, from the AMF, the capability information of the UE in the inactive state.

The capability information of the UE in the inactive state may include an SDT capability of the UE in the inactive state, and the like. This is not limited herein.

S301: The NG-RAN determines to release the UE to the inactive state and determines an inactive state eDRX configuration.

The NG-RAN may determine, in a historical use time period of the UE, whether to release the UE to the inactive state, may determine, based on communication quality of the NG-RAN, whether to release the UE to the inactive state, or the like. This is not limited herein. The inactive state eDRX configuration may include the eDRX cycle and the like. This is not limited herein either.

As shown in FIG. 8, after step S302 and before step S306, the method may further include step S303a to step S303c.

S303a: The AMF sends a second request to the SMF.

Correspondingly, the SMF receives the second request from the AMF.

The second request may be used to request to update a PDU session. Transmission of the second request and the following second response used as a response message of the second request may be performed by using a Namf message exchanged between the AMF and the SMF. For example, the second request may be Namf_PDUSession_UpdateSMContext request, and the second response may be Namf_PDUSession_UpdateSMContext response.

S303b: The SMF and the UPF perform session update.

S303c: The SMF sends the second response to the AMF.

Correspondingly, the AMF receives the second response from the SMF.

As shown in FIG. 8, after step S306, the method may further include step S307: The NG-RAN releases the UE to the inactive state.

In some feasible examples, before step S304, the method may further include: The UPF sends a data notification message to the SMF.

Correspondingly, the SMF receives the data notification message from the UPF. For this step, refer to descriptions of step S100a. Details are not described herein again.

In some feasible examples, after step S304 and before step S306, the method may further include: The AMF sends a first response to the SMF.

Correspondingly, the SMF receives the first response from the AMF.

The first response may be a response message of sixth information. The first response may carry buffering duration of downlink data. For details, refer to descriptions of step S100c. The first response may indicate to discard the downlink data when the buffering duration of the downlink data of the UE buffered in the UPF expires, to clear buffered data in a timely manner, and avoid occupying a resource of the UPF.

In some feasible examples, after step S304 and before step S306, the method may further include: The SMF sends a data notification response to the UPF.

Correspondingly, the UPF receives the data notification response from the SMF.

The data notification response may be a response message of the data notification message. The data notification response may include the buffering duration, and indicate the UPF to discard the downlink data when the buffering duration of the downlink data of the UE expires.

In some feasible examples, after step S304 and before step S306, the method may further include: The UPF performs, based on the buffering duration, timing or countdown on buffering time of the downlink data of the UE buffered in the UPF.

In some feasible examples, after step S306, the method may further include: The NG-RAN sends a first indication to the UE, and the NG-RAN sends a second indication to the AMF or the UPF.

Correspondingly, the UE receives the first indication from the NG-RAN. The AMF receives the second indication from the NG-RAN, or the UPF receives the second indication from the NG-RAN. The first indication may indicate the UE to perform small data transmission. For this step, refer to descriptions of step S106 and step S108. Details are not described herein again.

In some feasible examples, after the NG-RAN sends the first indication to the UE, and before the NG-RAN sends the second indication to the AMF or the UPF, the method may further include: The UE sends second information to the NG-RAN.

Correspondingly, the NG-RAN receives the second information from the UE. The second information is used to confirm that the UE is able to perform data transmission with the core network device, or is used to confirm that the UE performs connection resumption. For this step, refer to descriptions of step S107. Details are not described herein again.

In some feasible examples, after the NG-RAN sends the second indication to the AMF or the UPF, the method may further include: The UPF sends the small data to the NG-RAN.

Correspondingly, the NG-RAN receives the small data from the UPF.

In some feasible examples, after the UPF sends the small data to the NG-RAN, the method may further include: The UE and the NG-RAN perform a small data transmission procedure. For this step, refer to descriptions of step S110. Details are not described herein again.

The foregoing describes in detail the methods in embodiments of this application. The following provides apparatuses in embodiments of this application.

FIG. 9 is a diagram of a structure of a communication apparatus according to an embodiment of this application. The communication apparatus may include a transceiver unit 101 and a processing unit 102. The transceiver unit 101 may be an apparatus for inputting (receiving) or outputting (sending) a signal, and is configured to perform signal transmission with another network device or another component in the device.

The processing unit 102 may be an apparatus having a processing function, and may include one or more processors. The processor may be a general-purpose processor, a dedicated processor, or the like. The processor may be a baseband processor or a central processing unit. The baseband processor may be configured to process a communication protocol and communication data. The central processing unit may be configured to: control an apparatus (for example, a donor node, a relay node, or a chip), execute a software program, and process data of the software program.

The communication apparatus may be a terminal device, an access network device, an access and mobility management function network element, a session management function network element, or a user plane function network element, and may be used in an embodiment of at least one communication method in FIG. 4 to FIG. 8.

In a first embodiment, an access network device includes:
a transceiver unit 101, configured to receive first information from an access and mobility management function network element, where the first information carries a data size of downlink data of a terminal device buffered in a user plane function network element or a session management function, the terminal device is in an inactive state, and an eDRX cycle is configured by the access network device for the terminal device; and
a processing unit 102, configured to determine, based on the data size of the downlink data, that the downlink data is small data, where
the transceiver unit 101 is further configured to send a first indication to the terminal device, where the first indication indicates the terminal device to perform small data transmission; and
the access network device sends a second indication to the access and mobility management function network element or the user plane function network element, where the second indication indicates the user plane function network element to send the small data to the access network device.

In some feasible examples of the first embodiment, the transceiver unit 101 of the access network device is further configured to receive second information from the terminal device, where the second information is used to confirm that the terminal device is able to perform data transmission with a core network device, or is used to confirm that the terminal device performs connection resumption.

In the first embodiment, the access and mobility management function network element includes:
a transceiver unit 101, configured to receive third information from the session management function network element, where the third information carries the data size of the downlink data of the terminal device buffered in the user plane function network element or the session management function network element, the terminal device is in the inactive state, and the eDRX cycle is configured by the access network device for the terminal device, where
the transceiver unit 101 is further configured to send the first information to the access network device, where the first information carries the data size of the downlink data, and the data size of the downlink data may be used to determine whether the downlink data is small data.

In the first embodiment, the terminal device includes:
a transceiver unit 101, configured to receive the first indication from the access network device, where the first indication indicates the terminal device to perform small data transmission, the terminal device is in the inactive state, and the eDRX cycle is configured by the access network device for the terminal device.

In some feasible examples of the first embodiment, the transceiver unit 101 of the terminal device is further configured to send the second information to the access network device, where the second information is used to confirm that the terminal device is able to perform data transmission with the core network device, or is used to confirm that the terminal device performs connection resumption.

In the first embodiment, the session management function network element includes:
a transceiver unit 101, configured to send the third information to the access and mobility management function network element, where the third information carries the data size of the downlink data of the terminal device buffered in the user plane function network element or the session management function network element, the terminal device is in the inactive state, and the eDRX cycle is configured by the access network device for the terminal device.

In some feasible examples of the first embodiment, the eDRX cycle is greater than or equal to 10.24s.

In some feasible examples of the first embodiment, the transceiver unit 101 included in the user plane function network element is configured to send a data notification message to the session management function network element. Correspondingly, the transceiver unit 101 included in the session management function network element is configured to receive the data notification message from the user plane function network element.

In some feasible examples of the first embodiment, the transceiver unit 101 included in the user plane function network element is configured to send a first response to the session management function network element. Correspondingly, the transceiver unit 101 included in the session management function network element is configured to receive the first response from the user plane function network element.

In some feasible examples of the first embodiment, the transceiver unit 101 included in the session management function network element is configured to send a data notification response to the user plane function network element. Correspondingly, the transceiver unit 101 included in the user plane function network element is configured to receive the data notification response from the session management function network element.

In some feasible examples of the first embodiment, the processing unit 102 in the user plane function network element is configured to perform, based on buffering duration, timing or countdown on the buffering duration of the downlink data of the terminal device buffered in the user plane function network element.

In some feasible examples of the first embodiment, the transceiver unit 101 of the access and mobility management function network element is configured to send the first information to the access network device when the buffering duration expires.

In some feasible examples of the first embodiment, the processing unit 102 in the user plane function network element is configured to send the downlink data determined as small data to the access network device.

In a second embodiment, an access network device includes:
a transceiver unit 101, configured to receive, when buffering duration of downlink data of a terminal device buffered in a user plane function network element or a session management function network element expires, the downlink data from the user plane function network element, where the terminal device is in an inactive state, and an eDRX cycle is configured by the access network device for the terminal device, and
a processing unit 102, configured to determine that the downlink data is small data, where
the transceiver unit 101 is further configured to send a first indication to the terminal device, where the first indication indicates the terminal device to perform small data transmission.

In the second embodiment, the user plane function network element includes:
a transceiver unit 101, configured to receive a third indication from the session management function network element, where the third indication indicates to send, when the buffering duration of the downlink data of the terminal device buffered in the user plane function network element or the session management function network element expires, the downlink data to the access network device, where the terminal device is in the inactive state, and the eDRX cycle is configured by the access network device for the terminal device, where
the transceiver unit 101 is further configured to send, when the buffering duration of the downlink data of the terminal device buffered in the user plane function network element or the session management function network element expires, the downlink data to the access network device.

In the second embodiment, an access and mobility management function network element includes:
a processing unit 102, configured to obtain the buffering duration of the downlink data of the terminal device buffered in the user plane function network element or the session management function network element; and
a transceiver unit 101, configured to send fourth information to the session management function network element, where the fourth information carries the buffering duration.

In some feasible examples of the second embodiment, the processing unit 102 of the access and mobility management function network element is specifically configured to obtain, based on an eDRX configuration of the terminal device, the buffering duration of the downlink data of the terminal device buffered in the user plane function network element or the session management function network element. The eDRX configuration includes the eDRX cycle configured by the access network device.

In some feasible examples of the second embodiment, the eDRX cycle is greater than or equal to 10.24s.

In some feasible examples of the second embodiment, the transceiver unit 101 included in the user plane function network element is configured to send a data notification message to the session management function network element. Correspondingly, the transceiver unit 101 included in the session management function network element is configured to receive the data notification message from the user plane function network element.

In some feasible examples of the second embodiment, the transceiver unit 101 included in the session management function network element is configured to send a first request to the access and mobility management function network element. Correspondingly, the transceiver unit 101 included in the access and mobility management function network element is configured to receive the first request from the session management function network element.

In some feasible examples of the second embodiment, the processing unit 102 in the user plane function network element is configured to perform, based on the buffering duration, timing or countdown on the buffering duration of the downlink data of the terminal device buffered in the user plane function network element.

In a third embodiment, an access and mobility management function network element includes:
a transceiver unit 101, configured to receive fifth information from an access network device, where the fifth information carries an eDRX cycle configured by the access network device for a terminal device when the terminal device is in an inactive state, and the fifth information is used to determine that the terminal device and the access network device support small data transmission, where
the transceiver unit 101 is further configured to receive sixth information from a session management function network element, where the sixth information is used to determine that downlink data of the terminal device buffered in a user plane function network element or the session management network element is small data; and
the transceiver unit 101 is further configured to send a fourth indication to the access network device, where the fourth indication indicates the access network device to perform small data transmission.

In some feasible examples of the third embodiment, the fifth information further carries capability information of the terminal device. Further, the fifth information may include an SDT support capability of the terminal device. A processing unit 102 of the access and mobility management function network element is configured to determine, based on the capability information of the terminal device, that the user plane function network element supports buffering the small data of the terminal device.

In some feasible examples of the third embodiment, the sixth information carries a data size of the downlink data. The sixth information may include one piece of indication information, indicating that the downlink data of the terminal device buffered in the user plane function network element is small data. The indication information may be obtained through decision-making by the session management function network element. The sixth information may alternatively include the data size of the downlink data, so that the access and mobility management function network element may determine, based on the data size of the downlink data, whether the downlink data is small data.

In the third embodiment, the access network device includes:
a transceiver unit 101, configured to send the fifth information to the access and mobility management function network element, where the fifth information carries the eDRX cycle configured by the access network device for the terminal device when the terminal device is in the inactive state, and the fifth information is used to determine that the terminal device and the access network device support small data transmission, where
the transceiver unit 101 is further configured to receive the fourth indication from the access and mobility management function network element, where the fourth indication indicates the access network device to perform small data transmission.

In some feasible examples of the third embodiment, the transceiver unit 101 of the access network device is further configured to: send a first indication to the terminal device; and send a second indication to the access and mobility management function network element or the user plane function network element. The first indication indicates the terminal device to perform small data transmission, and the second indication indicates the user plane function network element to send the downlink data used as small data to the access network device.

In some feasible examples of the third embodiment, the transceiver unit 101 of the access network device is further configured to receive second information from the terminal device. The second information is used to confirm that the terminal device is able to perform data transmission with a core network device, or is used to confirm that the terminal device performs connection resumption.

In some feasible examples of the third embodiment, the eDRX cycle is greater than or equal to 10.24s.

In some feasible examples of the third embodiment, the transceiver unit 101 included in the user plane function network element is configured to send a data notification message to the session management function network element. Correspondingly, the transceiver unit 101 included in the session management function network element is configured to receive the data notification message from the user plane function network element.

In some feasible examples of the third embodiment, the transceiver unit 101 included in the user plane function network element is configured to send a first response to the session management function network element. Correspondingly, the transceiver unit 101 included in the session management function network element is configured to receive the first response from the user plane function network element.

In some feasible examples of the third embodiment, the transceiver unit 101 included in the session management function network element is configured to send a data notification response to the user plane function network element. Correspondingly, the transceiver unit 101 included in the user plane function network element is configured to receive the data notification response from the session management function network element.

In some feasible examples of the third embodiment, the processing unit 102 included in the user plane function network element is configured to perform, based on buffering duration, timing or countdown on the buffering duration of the downlink data of the terminal device buffered in the user plane function network element.

In some feasible examples of the third embodiment, the transceiver unit 101 included in the access and mobility management function network element is configured to send the fourth indication to the access network device when the buffering duration expires.

In some feasible examples of the third embodiment, the processing unit 102 included in the user plane function network element is configured to send the downlink data determined as small data to the access network device.

In some feasible examples of the third embodiment, the processing unit 102 included in the access network device and the access and mobility management function network element is configured to determine an eDRX parameter in a terminal device registration process. The eDRX parameter may include the eDRX cycle and the like. This is not limited herein.

In some feasible examples of the third embodiment, the transceiver unit 101 included in the access and mobility management function network element is configured to send, to the access network device, the capability information of the terminal device in the inactive state. Correspondingly, the transceiver unit 101 included in the access network device is configured to receive, from the access and mobility management function network element, the capability information of the terminal device in the inactive state. The capability information of the terminal device in the inactive state may include an SDT capability of the UE in the inactive state, and the like. This is not limited herein.

In some feasible examples of the third embodiment, the processing unit 102 included in the access network device is configured to determine to release the terminal device to the inactive state and determine an inactive state eDRX configuration.

In some feasible examples of the third embodiment, the transceiver unit 101 included in the access and mobility management function network element is configured to send a second request to the session management function network element. Correspondingly, the session management function network element receives the second request from the transceiver unit 101 included in the access and mobility management function network element. The second request may be used to request to update a PDU session.

In some feasible examples of the third embodiment, the processing unit 102 and the transceiver unit 101 that are included in the session management function network element and the user plane function network element are configured to perform session update.

In some feasible examples of the third embodiment, the transceiver unit 101 included in the session management function network element is configured to send a second response to the access and mobility management function network element. Correspondingly, the transceiver unit 101 included in the access and mobility management function network element receives the second response from the session management function network element.

In some feasible examples of the third embodiment, the transceiver unit 101 included in the access network device is configured to release the terminal device to the inactive state.

It should be noted that, for implementations of the units, refer to corresponding descriptions in at least one embodiment in FIG. 4 to FIG. 8.

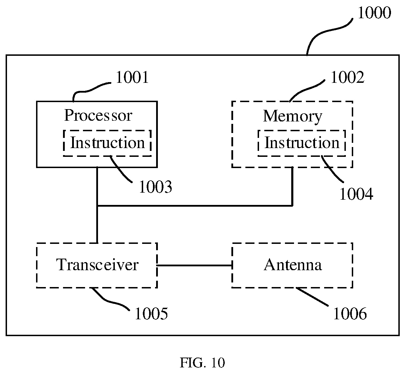

FIG. 10 is a diagram of a structure of another communication apparatus according to an embodiment of this application. As shown in FIG. 10, the communication apparatus 1000 may include one or more processors 1001. The processor 1001 may also be referred to as a processing unit, and may implement a corresponding control function. The processor 1001 may be a general-purpose processor, a dedicated processor, or the like. For example, the processor 1001 may be a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

In an optional design, the processor 1001 may also store instructions 1003, and the instructions 1003 may be run by the processor 1001, so that the communication apparatus 1000 performs the communication methods described in the foregoing method embodiments.

In another optional design, the processor 1001 may include a transceiver unit configured to implement receiving and sending functions. For example, the transceiver unit may be a transceiver circuit, an interface, an interface circuit, or a communication interface. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, the communication apparatus 1000 may include a circuit, and the circuit may implement the sending, receiving, or communication function in the foregoing communication method embodiments.

Optionally, the communication apparatus 1000 may include one or more memories 1002 that may store instructions 1004, and the instructions 1004 may be run on the processor 1001, so that the communication apparatus 1000 performs the communication methods described in the foregoing method embodiments. Optionally, the memory may further store data. Optionally, the processor 1001 may also store instructions and/or data. The processor 1001 and the memory 1002 may be separately disposed, or may be integrated together. For example, the correspondence described in the foregoing method embodiments may be stored in the memory 1002 or stored in the processor 1001.

Optionally, the communication apparatus 1000 may further include a transceiver 1005 and/or an antenna 1006. The processor 1001 may be referred to as a processing unit, and controls the communication apparatus 1000. The transceiver 1005 may be referred to as a transceiver unit, a transceiver, a transceiver circuit, a transceiver apparatus, a transceiver module, or the like, and is configured to implement a transceiver function.

Optionally, the communication apparatus 1000 in this embodiment of this application may be configured to perform the steps described in at least one communication method in FIG. 4 to FIG. 8 in embodiments of this application.

In a possible case, the communication apparatus 1000 may be a terminal device, may be an apparatus (for example, a chip, a chip system, or a circuit) in the terminal device, or may be an apparatus that can be used together with the terminal device. When the computer program instructions stored in the memory 1002 are executed, the transceiver 1005 is configured to perform an operation performed by the transceiver unit 101 in the foregoing embodiments, and the transceiver 1005 is further configured to send information to a communication apparatus other than the communication apparatus. The foregoing terminal device may be further configured to perform various communication methods performed by the terminal device in the method embodiments shown in FIG. 4 to FIG. 8. Details are not described again.

In a possible case, the communication apparatus 1000 may be a network device, for example, an access network device or a core network device, or an access and mobility management function network element, a session management function network element, and a user plane function network element in the core network device, may be an apparatus (for example, a chip, a chip system, or a circuit) in the network device, or may be an apparatus that can be used together with the network device. When the computer program instructions stored in the memory 1002 are executed, the transceiver 1005 is configured to receive information from a communication apparatus other than the communication apparatus 1000, and the transceiver 1005 is further configured to perform an operation performed by the transceiver unit 101 in the foregoing embodiments. The network device may be further configured to perform various communication methods performed by the network device in the method embodiments shown in FIG. 4 to FIG. 8. Details are not described again.

The processor and the transceiver that are described in this application may be implemented on an integrated circuit (integrated circuit, IC), an analog IC, a radio frequency integrated circuit RFIC, a mixed-signal IC, an application specific integrated circuit (application specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The communication apparatus described in the foregoing embodiments may be a network device or a terminal device. However, a scope of the communication apparatus described in this application is not limited thereto, and the structure of the communication apparatus may not be limited by FIG. 10. The communication apparatus may be an independent device or may be a part of a large device. For example, the communication apparatus may be:
(1) an independent integrated circuit IC, a chip, or a chip system or subsystem;
(2) a set having one or more ICs, where optionally, the IC set may also include a storage component configured to store data and/or instructions;
(3) an ASIC, for example, a mobile station modem (mobile station modem, MSM);
(4) a module that can be embedded in another device; or
(5) others, or the like.

An embodiment of this application further provides a computer-readable storage medium, where the computer-readable storage medium stores a computer program, and when the computer program is run on one or more processors, one or more steps in any one of the foregoing communication methods are implemented.

An embodiment of this application further provides a computer program product, and the computer program product is configured to store a computer program. When the computer program is run on a computer, the computer or a processor is enabled to perform one or more steps in any one of the foregoing communication methods. If each of component modules of the foregoing device is implemented in a form of a software functional unit and is sold or used as an independent product, the component modules may be stored in a computer-readable storage medium.

An embodiment of this application further discloses a communication system. The system includes a terminal device and a network device. For specific descriptions, refer to one or more steps in any one of the foregoing communication methods.

An embodiment of this application further provides a first chip, including a processor and a memory. The processor is configured to: invoke, from the memory, instructions stored in the memory, and run the instructions, so that a device in which the chip is installed performs one or more steps in any one of the foregoing communication methods.

An embodiment of this application further provides a second chip, including an input interface, an output interface, and a processing circuit. The input interface, the output interface, and the processing circuit are connected to each other through an internal connection path, and the processing circuit is configured to perform one or more steps in any one of the foregoing communication methods.

An embodiment of this application further provides a third chip, including an input interface, an output interface, and a processor, and optionally, further including a memory. The input interface, the output interface, the processor, and the memory are connected to each other through an internal connection path, and the processor is configured to execute code in the memory. When the code is executed, the processor is configured to perform one or more steps in any one of the foregoing communication methods.

An embodiment of this application further provides a chip system. The chip system includes at least one processor, a memory, and an interface circuit. The memory, a transceiver, and the at least one processor are interconnected through a line. At least one memory stores instructions. When the instructions are executed by the processor, one or more steps in any one of the foregoing communication methods are implemented.

In conclusion, during implementation of embodiments of this application, the access network device or the core network device makes a decision about whether to perform small data transmission. If the access network device or the core network device makes a decision to perform small data transmission, when an inactive state eDRX cycle is configured for the terminal device, the terminal device remains in an inactive state and performs data or signaling transmission, so that power consumption caused by RRC state switching performed by the terminal device is reduced.

It should be understood that the memory mentioned in embodiments of this application may be a volatile memory or a non-volatile memory, or may include both a volatile memory and a non-volatile memory. The non-volatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). The memory is any other medium that can be used to carry or store expected program code in a form of an instruction or a data structure and that can be accessed by a computer, but is not limited thereto. The memory in embodiments of this application may alternatively be a circuit or any other apparatus that can implement a storage function, and is configured to store program instructions and/or data.

It should be further understood that, the processor mentioned in embodiments of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that units and algorithm steps in the examples described with reference to embodiments provided in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. A part or all of the units may be selected based on actual need to achieve the objectives of the solutions of embodiments.

In addition, functional units in embodiments of this application may be integrated into one processing unit, each of the units may exist alone physically, or two or more units are integrated into one unit.

When functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps in the methods in embodiments of this application. The foregoing storage medium includes any medium that can store program code, for example, a USB flash drive, a removable hard disk, a ROM, a RAM, a magnetic disk, or an optical disc.

A sequence of the steps of the method in embodiments of this application may be adjusted, combined, or removed based on an actual need.

The modules/units in the apparatus in embodiments of this application may be combined, divided, and deleted based on an actual need.

The foregoing embodiments are merely intended for describing the technical solutions of this application instead of limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. A communication method, comprising:
receiving, by an access network device, first information from an access and mobility management function network element, wherein the first information carries a data size of downlink data of a terminal device buffered in a user plane function network element or a session management function network element, the terminal device is in an inactive state, and an extended discontinuous reception eDRX cycle is configured by the access network device for the terminal device;
determining, by the access network device based on the data size of the downlink data, that the downlink data is small data;
sending, by the access network device, a first indication to the terminal device, wherein the first indication indicates the terminal device to perform small data transmission; and
sending, by the access network device, a second indication to the access and mobility management function network element or the user plane function network element, wherein the second indication indicates the user plane function network element to send the small data to the access network device.

2. The communication method according to claim 1, wherein before the sending, by the access network device, a second indication to the access and mobility management function network element or the user plane function network element, the method further comprises:
receiving, by the access network device, second information from the terminal device, wherein the second information is used to confirm that the terminal device is able to perform data transmission with a core network device, or is used to confirm that the terminal device performs connection resumption.

3. The communication method according to claim 1 or 2, wherein the eDRX cycle is greater than or equal to 10.24 seconds.

4. A communication method, comprising:
receiving, by an access and mobility management function network element, third information from a session management function network element, wherein the third information carries a data size of downlink data of a terminal device buffered in a user plane function network element or the session management function network element, the terminal device is in an inactive state, and an eDRX cycle is configured by an access network device for the terminal device; and
sending, by the access and mobility management function network element, first information to the access network device, wherein the first information carries the data size of the downlink data.

5. The communication method according to claim 4, wherein after the sending, by the access and mobility management function network element, first information to the access network device, the method further comprises:
receiving, by the access and mobility management function network element, a second indication from the access network device, wherein the second indication indicates the user plane function network element to send the downlink data used as small data to the access network device.

6. The communication method according to claim 4 or 5, wherein the eDRX cycle is greater than or equal to 10.24 seconds.

7. A communication method, comprising:
receiving, by an access network device when buffering duration of downlink data of a terminal device buffered in a user plane function network element or a session management function network element expires, the downlink data from the user plane function network element, wherein the terminal device is in an inactive state, and an eDRX cycle is configured by the access network device for the terminal device;
determining, by the access network device, that the downlink data is small data; and
sending, by the access network device, a first indication to the terminal device, wherein the first indication indicates the terminal device to perform small data transmission.

8. The communication method according to claim 7, wherein the eDRX cycle is greater than or equal to 10.24 seconds.

9. A communication method, comprising:
receiving, by a user plane function network element, a third indication from a session management function network element, wherein the third indication indicates to send, when buffering duration of downlink data of a terminal device buffered in the user plane function network element or the session management function network element expires, the downlink data to an access network device, the terminal device is in an inactive state, and an eDRX cycle is configured by the access network device for the terminal device; and
sending, by the user plane function network element, the downlink data to the access network device when the buffering duration expires.

10. The communication method according to claim 9, wherein the eDRX cycle is greater than or equal to 10.24 seconds.

11. A communication method, comprising:
obtaining, by an access and mobility management function network element, buffering duration of downlink data of a terminal device buffered in a user plane function network element or a session management function network element; and
sending, by the access and mobility management function network element, fourth information to the session management function network element, wherein the fourth information carries the buffering duration.

12. The communication method according to claim 11, wherein the obtaining, by an access and mobility management function network element, buffering duration of downlink data of a terminal device buffered in a user plane function network element or a session management function network element comprises:
obtaining, by the access and mobility management function network element based on an eDRX configuration of the terminal device, the buffering duration of the downlink data of the terminal device buffered in the user plane function network element or the session management function network element, wherein the eDRX configuration comprises an eDRX cycle configured by an access network device.

13. The communication method according to claim 12, wherein the eDRX cycle is greater than or equal to 10.24 seconds.

14. A communication method, comprising:
receiving, by an access and mobility management function network element, fifth information from an access network device, wherein the fifth information carries an eDRX cycle configured by the access network device for a terminal device when the terminal device is in an inactive state, and the fifth information is used to determine that the terminal device and the access network device support small data transmission;
receiving, by the access and mobility management function network element, sixth information from a session management function network element, wherein the sixth information is used to determine that downlink data of the terminal device buffered in a user plane function network element or the session management function network element is small data; and
sending, by the access and mobility management function network element, a fourth indication to the access network device, wherein the fourth indication indicates the access network device to perform small data transmission.

15. The communication method according to claim 14, wherein the fifth information further carries capability information of the terminal device, and after the receiving, by an access and mobility management function network element, fifth information from an access network device, the method further comprises:
determining, by the access and mobility management function network element based on the capability information of the terminal device, that the user plane function network element supports buffering the small data of the terminal device.

16. The communication method according to claim 14 or 15, wherein the sixth information carries a data size of the downlink data.

17. The communication method according to any one of claims 14 to 16, wherein after the sending, by the access and mobility management function network element, a fourth indication to the access network device, the method further comprises:
receiving, by the access and mobility management function network element, a second indication from the access network device, wherein the second indication indicates the user plane function network element to send the downlink data used as small data to the access network device.

18. The communication method according to any one of claims 14 to 16, wherein the eDRX cycle is greater than or equal to 10.24 seconds.

19. A communication method, comprising:
sending, by an access network device, fifth information to an access and mobility management function network element, wherein the fifth information carries an eDRX cycle configured by the access network device for a terminal device when the terminal device is in an inactive state, and the fifth information is used to determine that the terminal device and the access network device support small data transmission; and
receiving, by the access network device, a fourth indication from the access and mobility management function network element, wherein the fourth indication indicates the access network device to perform small data transmission.

20. The communication method according to claim 19, wherein after the receiving, by the access network device, a fourth indication from the access and mobility management function network element, the method further comprises:
sending, by the access network device, a first indication to the terminal device, wherein the first indication indicates the terminal device to perform small data transmission.

21. The communication method according to claim 19 or 20, wherein after the receiving, by the access network device, a fourth indication from the access and mobility management function network element, the method further comprises:
sending, by the access network device, a second indication to the access and mobility management function network element or a user plane function network element, wherein the second indication indicates the user plane function network element to send downlink data used as small data to the access network device.

22. The communication method according to any one of claims 19 to 21, further comprising:
receiving, by the access network device, second information from the terminal device, wherein the second information is used to confirm that the terminal device is able to perform data transmission with a core network device, or is used to confirm that the terminal device performs connection resumption.

23. The communication method according to any one of claims 19 to 22, wherein the eDRX cycle is greater than or equal to 10.24 seconds.

24. A communication apparatus, comprising:
a transceiver unit, configured to receive first information from an access and mobility management function network element, wherein the first information carries a data size of downlink data of a terminal device buffered in a user plane function network element or a session management function network element, the terminal device is in an inactive state, and an extended discontinuous reception eDRX cycle is configured by an access network device for the terminal device; and
a processing unit, configured to determine, based on the data size of the downlink data, that the downlink data is small data, wherein
the transceiver unit is further configured to send a first indication to the terminal device, wherein the first indication indicates the terminal device to perform small data transmission; and
the transceiver unit is further configured to send a second indication to the access and mobility management function network element or the user plane function network element, wherein the second indication indicates the user plane function network element to send the small data to the access network device.

25. The apparatus according to claim 24, wherein before sending the second indication to the access and mobility management function network element or the user plane function network element, the transceiver unit is further configured to receive second information from the terminal device, wherein the second information is used to confirm that the terminal device is able to perform data transmission with a core network device, or is used to confirm that the terminal device performs connection resumption.

26. The apparatus according to claim 24 or 25, wherein the eDRX cycle is greater than or equal to 10.24 seconds.

27. A communication apparatus, comprising:
a transceiver unit, configured to receive third information from a session management function network element, wherein the third information carries a data size of downlink data of a terminal device buffered in a user plane function network element or the session management function network element, the terminal device is in an inactive state, and an eDRX cycle is configured by an access network device for the terminal device, wherein
the transceiver unit is further configured to send first information to the access network device, wherein the first information carries the data size of the downlink data.

28. The apparatus according to claim 27, wherein after sending the first information to the access network device, the transceiver unit is further configured to receive a second indication from the access network device, wherein the second indication indicates the user plane function network element to send the downlink data used as small data to the access network device.

29. The apparatus according to claim 27 or 28, wherein the eDRX cycle is greater than or equal to 10.24 seconds.

30. A communication apparatus, comprising:
a transceiver unit, configured to receive, when buffering duration of downlink data of a terminal device buffered in a user plane function network element or a session management function network element expires, the downlink data from the user plane function network element, wherein the terminal device is in an inactive state, and an eDRX cycle is configured by an access network device for the terminal device; and
a processing unit, configured to determine that the downlink data is small data, wherein
the transceiver unit is further configured to send a first indication to the terminal device, wherein the first indication indicates the terminal device to perform small data transmission.

31. The apparatus according to claim 30, wherein the eDRX cycle is greater than or equal to 10.24 seconds.

32. A communication apparatus, comprising:
a transceiver unit, configured to receive a third indication from a session management function network element, wherein the third indication indicates to send, when buffering duration of downlink data of a terminal device buffered in a user plane function network element or the session management function network element expires, the downlink data to an access network device, the terminal device is in an inactive state, and an eDRX cycle is configured by the access network device for the terminal device, wherein
the transceiver unit is further configured to send the downlink data to the access network device when the buffering duration expires.

33. The apparatus according to claim 32, wherein the eDRX cycle is greater than or equal to 10.24 seconds.

34. A communication apparatus, comprising:
a processing unit, configured to obtain buffering duration of downlink data of a terminal device buffered in a user plane function network element or a session management function network element; and
a transceiver unit, configured to send fourth information to the session management function network element, wherein the fourth information carries the buffering duration.

35. The apparatus according to claim 34, wherein the processing unit is specifically configured to obtain, based on an eDRX configuration of the terminal device, the buffering duration of the downlink data of the terminal device buffered in the user plane function network element or the session management function network element, wherein the eDRX configuration comprises an eDRX cycle configured by an access network device.

36. The apparatus according to claim 35, wherein the eDRX cycle is greater than or equal to 10.24 seconds.

37. A communication apparatus, comprising:
a transceiver unit, configured to receive fifth information from an access network device, wherein the fifth information carries an eDRX cycle configured by the access network device for a terminal device when the terminal device is in an inactive state, and the fifth information is used to determine that the terminal device and the access network device support small data transmission, wherein
the transceiver unit is further configured to receive sixth information from a session management function network element, wherein the sixth information is used to determine that downlink data of the terminal device buffered in a user plane function network element or the session management function network element is small data; and
the transceiver unit is further configured to send a fourth indication to the access network device, wherein the fourth indication indicates the access network device to perform small data transmission.

38. The apparatus according to claim 37, wherein the fifth information further carries capability information of the terminal device, and the processing unit is further configured to determine, based on the capability information of the terminal device, that the user plane function network element supports buffering the small data of the terminal device.

39. The apparatus according to claim 37 or 38, wherein the sixth information carries a data size of the downlink data.

40. The apparatus according to any one of claims 37 to 39, wherein the transceiver unit is further configured to receive a second indication from the access network device, wherein the second indication indicates the user plane function network element to send the downlink data used as small data to the access network device.

41. The apparatus according to any one of claims 37 to 39, wherein the eDRX cycle is greater than or equal to 10.24 seconds.

42. A communication apparatus, comprising:
a transceiver unit, configured to send fifth information to an access and mobility management function network element, wherein the fifth information carries an eDRX cycle configured by an access network device for a terminal device when the terminal device is in an inactive state, and the fifth information is used to determine that the terminal device and the access network device support small data transmission, wherein
the transceiver unit is further configured to receive a fourth indication from the access and mobility management function network element, wherein the fourth indication indicates the access network device to perform small data transmission.

43. The apparatus according to claim 42, wherein after receiving the fourth indication from the access and mobility management function network element, the transceiver unit is further configured to send a first indication to the terminal device, wherein the first indication indicates the terminal device to perform small data transmission.

44. The apparatus according to claim 42 or 43, wherein after receiving the fourth indication from the access and mobility management function network element, the transceiver unit is further configured to send a second indication to the access and mobility management function network element or a user plane function network element, wherein the second indication indicates the user plane function network element to send downlink data used as small data to the access network device.

45. The apparatus according to any one of claims 42 to 44, wherein the transceiver unit is further configured to receive second information from the terminal device, wherein the second information is used to confirm that the terminal device is able to perform data transmission with a core network device, or is used to confirm that the terminal device performs connection resumption.

46. The apparatus according to any one of claims 42 to 45, wherein the eDRX cycle is greater than or equal to 10.24 seconds.

47. A communication apparatus, comprising a processor, wherein the processor is configured to execute instructions stored in a memory, and when the instructions are executed, the communication method according to any one of claims 1 to 23 is implemented.

48. The communication apparatus according to claim 47, further comprising one or more of the memory and a transceiver, wherein the transceiver is configured to receive and send data and/or signaling.

49. A computer-readable storage medium, wherein the computer-readable storage medium stores a computer program, and when the computer program is run on one or more processors, the method according to any one of claims 1 to 23 is implemented.
